# EUROPEAN PATENT SPECIFICATION

(11) **EP 0 587 731 B1**
(45) Date of publication and mention of the grant of the patent: **09.04.1997**
(21) Application number: 92912788.4
(22) Date of filing: 04.06.1992
(51) Int. Cl.: B65D 1/06, B65D 1/20, B65D 19/18

(54) **CONTAINER FOR TRANSPORTING LIQUIDS AND SOLIDS**
BEHÄLTER ZUM TRANSPORT VON FLÜSSIGKEITEN UND FESTSTOFFEN
CONTENEUR SERVANT A TRANSPORTER DES LIQUIDES ET DES SOLIDES

(30) Priority: 04.06.1991 US 710027
(43) Date of publication of application: 23.03.1994
(60) Divisional application: 96106762.6
(73) Proprietor: 21st CENTURY CONTAINERS, LTD., Atlanta, GA 30336 (US)
(72) Inventor: BROWN, James, A., Abingdon, VA 24210 (US); DUNKEN, Sidney, H., Jonesboro, GA 30236 (US); LANE, Joseph, J., Statesboro, GA 30458 (US); HARRIS, Jack, E., Savannah, GA 31411 (US); ETTORE, Steven, P., 1280 W. Peachtree Street, N.W., Atlanta, GA 30309 (US)
(74) Representative: Altenburg, Udo, Dipl.-Phys.
(86) International application number: PCT/US92/04742
(87) International publication number: WO 92/21575

(56) References cited:
- DE-A- 2 906 974
- GB-A- 2 023 089
- US-A- 4 711 365
- US-A- 4 930 648

## Description

### BACKGROUND OF THE INVENTION

### 1. Field of Invention

This invention relates to containers with a capacity of 30 to 1000 gallons (110-3800 liters) for the transporting and storage of any material that needs to be so handled, such as, but not limited to, liquids, greases, prills, dry powders, and combinations of two or more of the same. In particular, it relates to such containers as have dispensing ports and are reusable.

### 2. Description of Related Art

Many liquids, greases, prills, dry powders and combinations thereof, used in large quantities in manufacturing operations, are often transported in what are called "drums", "intermediate bulk containers", and "bulk containers". The term "drum" is generally reserved for containers having a capacity of no more than 110 gallons (U.S.A.) (420 liters). The term "intermediate bulk container" has been used to refer to a container having a capacity in the range of 110 to 790 gallons (420 to 3,000 liters), while the term "bulk container" is sometimes used to mean a container having a capacity greater than 790 gallons (3,000 liters).

Often it is desirable to be able to quickly and easily draw off just a portion of such a container's contents. For this purpose, these containers may in some instances be equipped with a dispensing device, e.g., a gravity flow valve at or below the bottom of the container. In other cases dispensing is accommodated through bung holes by pouring or pumping.

Containers larger than the traditional fifty (50) or fifty-five (55) gallon (190 or 210 liter) metal drums have grown in popularity in recent years. Thus, for example, blow-molded and rotational-molded plastic bottles ranging in size from about thirty (30) to one thousand (1,000) gallons (115 to 3,800 liters) are now in widespread use. Often these containers are held inside wooden or metal crates or boxes, inside multi-walled, corrugated paper boxes, or inside other means of support designed to enable the containers to pass certain certification tests required by appropriate regulatory agencies when transported. After these bottles are empty, however, it is very difficult to clean them out so that they can be reused, due to their small openings. Often, these bottles are scrapped after one use. The certified reusable containers, which cannot be disassembled, are expensive to ship empty to the place of cleaning, refilling, or disposal, and it is an added expense to return the enclosures for the bottles.

Steel drums, because of their weight, tendency to leak and dent, difficulty to clean, and tendency to corrode, are less than desirable. Today, most drums are designed to be used once, then discarded. A current reported estimate of the cost of handling and disposing of a fifty-five (55) gallon (210 liter) drum is forty (40) to fifty (50) dollars (U.S.A.). Also, drums generally cannot be shipped with a dispenser valve in place; it prevents stacking, and/or is in constant danger of being broken off, so the valve has to be installed in the drum's bunghole by the customer. Then, if the valve is a gravity flow valve, the drum most often is turned on its side and secured with blocks or laid in a cradle to keep it from rolling.

Another common problem with plastic containers and steel drums is a tendency not to drain completely, leaving as much as seven (7) to eight (8) percent of their contents in the bottom. To our knowledge, none of the plastic containers presently on the market can be molded with a sloped bottom and a controlled variation in wall thickness of greater than 3 to 1, and also be a freestanding upright container and pass certification (e.g. by the U.S.A. Department of Transportation). For this reason, and because of low strengths of material, the sloped-bottom plastic containers are typically placed within a steel upright enclosure having an interior bottom configured to conform to the sloped bottom of the container.

A drawback with blow-molded and rotational molded containers is their tendency to leak at the connection between the container and the dispenser valve's neck. The neck typically is sonically or thermally welded to the container. When the container is full, the connection is under substantial stress. A minor bumping of the dispenser valve can rupture the weld.

Another significant disadvantage of these type containers is their inability to be molded with varying wall thickness for drilling and tapping of strong, threaded ports for valves and other accessories.

Steel containers, by their nature, are heavier than plastic, exhibit high thermal conductivity (which results in extreme temperature fluctuations that sometimes diminish product quality and induce expansion and contraction of the container, which increases the possibility of leakage), are less resilient than plastics (which results in permanent deformation from drops and wall impacts), are generally subject to corrosion, spark from certain abrasive or impact incidents, and are expensive.

In US-A-4,930,648 a transportable, plastic, self-supporting container is described which comprises a rigid, round plastic vessel, according to the preamble of claim 1.

This plastic vessel is molded in one piece and comprises a variable wall thickness and furthermore comprises a bottom, a lateral wall which comprises a recess adjacent to said bottom and which is thicker at said recess than the thinnest thickness elsewhere. This container furthermore comprises securing means located on a lid.

It is an object of the present invention to provide for a transportable, reusable, returnable, self-supporting plastic upright container that is lighter than a comparable size steel container, is corrosion resistant, has low thermal conductivity, drains completely, is stackable even when full (either for transportation or storage), can easily be cleaned out, can be efficiently transported and stored when empty by disassembling and nesting, can be fitted with a gravity flow dispenser valve that will resist damage during transportation of the filled container, can pass relevant regulatory agency (e.g. U.S.A. Department of Transportation) certification tests without requiring an outer protective shield of wire, steel or other material, and that can be molded (without welds) with varying wall thickness for added strength and to allow numerous threaded access ports. The container of the present invention satisfies these needs.

This object is achieved by a container according to claim 1. Further embodiments are defined in the dependent claims.

### SUMMARY OF THE INVENTION

The container of the present invention is comprised of a rigid, round, plastic vessel, molded in one piece, and a full- diameter removable lid for the vessel with an adequate size cap for filling, bung port, and attachment of accessories. The vessel may be nested in a pallet tub for handling, or may have pallet slots or legs molded as part of the vessel, or may be attached to the more common wooden pallet. The vessel has a bottom, a lateral wall, and an open top. The lateral wall is equipped with threads or other means for securing the lid to the top of the vessel and, thereby, sealing the vessel. The wall is inclined inwardly from top to bottom so as to define an upper truncated conical section and a lower truncated conical section coaxial with the upper section. The lower conical section is set back, so as to create a sloped shoulder running horizontally around the circumference of the vessel. This shoulder resists wall deflection and allows the vessel to be inserted into a pallet tub which allows forklift use without the use of a wooden pallet. The shoulder set-back allows the vessel and the tub to have nearly a common outer-wall alignment so that the assembly can be nested into another empty unit for more economical shipment. Both of the conical sections are sections of right circular cones. There is a recess or cavity in the wall, adjacent to the bottom, for valve placement. At the location of the recess, the wall is molded the required thickness for ample valve threads. The inside surface of the bottom of the vessel is sloped downward, toward the recess, for drainage. This downward slope is preferably between about one and one-half (1.5) and forty-five (45) degrees, depending upon the flow characteristics of the material stored. The exterior of the bottom of the vessel preferably has a plurality of diverging ribs, extending from the inner valve port, to prevent deflection of the bottom when full, which would make drainage less efficient. At the point of convergence of the bottom ribs, but on the interior bottom, by the valve port, there is preferably a small, semicircular recess, or well, molded into the bottom to allow for the inside opening to the valve to align evenly with the bottom of the tank for complete drainage. The well also allows release of the drill and tap core when machining.

The upper conical wall section is preferably strengthened by a plurality of interior vertical ribs to prevent buckling under stacking loads. Near the top of the vessel a small horizontal rib is preferably provided for attaching security ties between the vessel and the lid.

By molding vessel wall areas at varying thicknesses, the port area of the wall can be drilled and tapped so as to create a horizontal discharge hole that is suitable for receiving a male-threaded dispensing device. This provides a dispenser valve that is more leak-resistant than can be achieved with the blow-molded or rotational molded containers. Preferably, the lowest point of the discharge hole will be at substantially the same level as the lowest point inside the vessel.

The angle of inclination of the vessel wall is preferably within the range of about two (2) to ten (10) degrees. The ratio of the height of the vessel to the diameter of the vessel at its bottom is preferably within the range of about 1:1 to 2:1.

The vertical ribs in the vessel's wall preferably are convex on the inner surface of the wall and flush on the outer surface of the wall, so as to allow the vessel to fit snugly in a reinforcing tub (to be described later herein) and also to prevent damage to the ribs during handling and shipping.

In use, the container may be mounted on a separate pallet. Preferably the underside of the bottom of the vessel will have a plurality of downwardly projecting reinforcing ribs, or fins, that are substantially flush on their bottom edges with the bottom of the vessel's lateral wall. At least some of these ribs preferably are triangular in shape and extend radially from the recess in the wall.

Preferably, the container will be secured to the separate pallet by at least two inelastic securing straps. The straps ideally will attach to the outer edge of the lid and the sides of the pallet. Preferably, the pallet is designed to receive a forklift's tines. In that case, the straps should be positioned so as not to interfere with the entry ports, or pockets, for the tines.

Alternatively, the vessel's bottom can be structured so as to serve as its own pallet. If the container is to have such an integral pallet, then the lower section of the vessel's lateral wall will extend further below the vessel's bottom, and this lower section will include forklift pockets, preferably permitting at least two-way entry. Preferably, the pockets will be on either side of the dispenser device, so as to permit easy access to a row of the containers aligned side by side with their dispensers toward the front. If desired, the forklift pockets can permit four-way entry, i.e., from either side, from the rear, or from the front.

It is contemplated that the vessel of the present invention can have a capacity anywhere from about thirty (30) to one thousand (1,000) gallons (115 to 3800 liters). Most commonly, however, the capacity will be in the range of about fifty-five (55) to five hundred (500) gallons (210 to 1900 liters).

The thickness of the vessel wall and bottom will depend on the particular plastic from which it is molded and the size of the vessel. For a typical 360 gallon (1,400 liter) vessel the wall at the valve recess will generally have a thickness within the range of about one (1) to two (2) inches (2.5 to 5 cm), and the thickness of the wall elsewhere will generally be within the range of about 0.145 to 0.350 inch (.363 to .875 cm), with thicker areas in the radii (i.e., where two planes meet at an angle).

The lid is equipped with threads, or other means for securing the lid to the top of the vessel, that cooperate with corresponding means on the vessel's wall. The lid has a threaded fill opening, preferably centrally located, and a threaded cap that mates with the threads in the fill opening. Preferably, the cap for the fill opening will have at least one bunghole in it and a bung to plug each hole. The bunghole preferably is formed with female threads, to receive a male-threaded bungplug. Preferably a cap seal will be inboard of the thread area to prevent contamination of the threads by product infiltration. Both the lid and cap may be drilled and tapped for several bung sizes, and the membrane thickness of the lid and cap can vary to accommodate these threaded port locations.

Preferably, the lid for the vessel will have an expansion chamber that will trap a pocket of air when the container is filled with a liquid to the bottom of the fill opening. The expansion chamber advantageously may be in the shape of an upwardly contoured ring -- i.e., like a vaulted ceiling -- that is concentric with the lid's circumference.

The means for securing the lid to the top of the vessel may be circumferential threads on the lid that mate with circumferential threads on the top of the lateral wall of the vessel. The lid's circumferential threads preferably will be in a narrow annulus defined by two nearly parallel, circumferential wall sections projecting downward from the underside of the lid. A seal is preferably located in the top of this annulus for compression upon assembly. The width of the annulus preferably is approximately the same as the width of the vessel's lateral wall at its top. This construction protects the lid from being jarred loose if the vessel is dropped or receives a blow.

The lid of the container can be formed with a plurality of fastening slots positioned about its circumference, or about the outer concentric rib on the lid's top surface. The container may then be secured to a pallet by fastening inelastic securing straps between these slots and tie-down points located on the pallet.

The lid is preferably configured so that, when the assembled containers and tubs are stacked, the pallet legs of an upper container will contact the lid of a lower container immediately inboard of an inner concentric rib on the top surface of the lid. This helps place the weight of an upper container on the inner edge of a concentric continuous gusset molded into the bottom surface of the lid, thus preventing the lid(s) of the lower container(s) from sagging, by transferring the weight to an area over the vessel's wall. The inner concentric rib on the top of the lid serves as a guide for accurate stacking of containers and resists lateral movement of the upper container.

It is also desirable that the lid have an upturned vertical rib around its outer edge, especially when it is molded with female threads. The plastic tends to shrink into these threads during the molding process, making it difficult to separate the lid and the mold. By having an outer rib on the lid, this shrinkage is reduced.

Preferably, the lid will also have a plurality of radial turning channels in the inner and outer concentric ribs. The presence of the concentric ribs and the turning channels facilitates the process of separating the mold and the lid during manufacturing and also facilitates attaching the lid to the vessel. The core mold for forming the lid can be removed by rotation, while the channels engaging the cavity mold hold the part during the disengagement of the threads. These radial turning channels can also hold the lid while the thread core for the cap is disengaged and the lid is still in its cavity mold. These channels also provide an easement for water to drain off the top of the lid when the lid (as is preferred) is molded with a downwardly sloped surface away from the centrally located fill cap and toward the outer edge of the lid. To further decrease the possibility of contamination through the fill cap, the female-threaded opening for the cap is preferably above the lid surface.

For a typical 360 gallon (1,400 liter) container the lid will generally have a membrane thickness of approximately 0.375 inch (.938 cm), thickening to approximately 1.90 inches (4.75 cm) at the perimeter of the female bunghole for the large cap, and thickening to approximately 2.0 inches (5 cm) at the outer section of the continuous gusset formed in the bottom of the lid immediately inside the outer thread section. The height of the outer rim of the lid will normally be between three and four inches (7.5 and 10 cm), with a buttress thread section of 2.0 inches (5 cm) or more in contact height. Ribbed indents are preferably provided around the major bunghole for connecting security tabs to the bung. Slots are preferably provided in the outer concentric rib for connecting security tabs to the vessel and for attaching the fastening straps between the lid and the pallet, when so utilized.

The fill cap in the lid preferably will be molded with male threads, and for a 360 gallon (1,400 liter) container will normally be approximately 1.4 inches (3.5 cm) thick at the thread area, 0.75 inch (1.88 cm) thick in its center area (to accommodate female threads for larger bungs, e.g., 4-inch bungs), 0.40 inch (1 cm) thick in the concentric membrane between the center area and the outer threaded section, and preferably 12 inches (30 cm) in diameter. The center area of the lid can be drilled and tapped with a bunghole of sufficient size to accommodate accessories such as agitators, pumps, spray cleaning heads and other such devices. The fill cap membrane (i.e., the ring-shaped zone between the threaded perimeter and the center area) preferably has sufficient width and thickness to accommodate one or more two-inch bungs, or to be drilled and tapped to accept bolt patterns on the mounting plates of accessories. The cap is preferably equipped with lug indents for removing the cap from its core mold and for tightening the cap to the lid. Ribbed indents are preferably provided on the cap perimeter for security tabs. When the cap is assembled into the lid it preferably compresses an internal seal resting on a lip formed in the bottom of the major female bunghole of the lid, thereby sealing the threads from contact with the contents of the vessel. In the alternative, the cap may be molded with a top flange that will compress an external seal, or both seals can be incorporated.

A pallet tub may be utilized to add greater strength to the vessel, rather than mount the vessel on a flat pallet or mold it with an integral pallet. The rigid, round, plastic tub should be of a shape and size that permit the vessel to sit snugly inside. The tub, which is also molded in one piece, has a bottom, a lateral wall, and an open top. To permit the tub to strengthen the vessel and to serve as a pallet, the tub's lateral wall should extend below the tub's bottom and should include forklift pockets permitting at least two-way entry. The height of the tub's wall above its bottom should preferably be about thirty-three (33) to fifty (50) percent of the height of the vessel's lateral wall. Preferably, the top of the tub's lateral wall will correspond to the angled shoulder formed by the junction of the upper and lower truncated conical sections. If desired, the tub's forklift pockets may be configured to permit four-way entry. Preferably the tub will be bolted to the bottom of the vessel or tank for ease of handling and to prevent separation.

If desired, the tub may be equipped with a strengthening lip that extends horizontally from the tub's wall at the level of the tub's interior bottom. Additionally, two or more raised semi-circular ribs are preferably molded into the interior bottom of the tub to abut and restrain one or more of the ribs in the exterior bottom of the vessel, to prevent rotation of the vessel in the tub.

The tub wall is inclined inwardly from top to bottom and is preferably strengthened by a plurality of interior vertical ribs. These ribs create a void space between the wall of the tub and the wall of the vessel, which provides added protection against accidental puncture by forklifts or other equipment. Further protection can be obtained by filling these vertical channels with replaceable metal plates or other puncture-resistant material. An opening is provided in the tub sidewall for access to the valve of the vessel. A vertical sliding door may be located over the access opening and be guided between the tub and vessel walls and between two of the vertical ribs in the tub. A sump or lowered floor is preferably provided at the access to allow a valve having a diameter greater than two inches (5 cm) to be utilized. Slots are preferably provided in the tub and the access door to accommodate a security locking device.

For a typical pallet tub for holding a 360 gallon (1,400 liter) container, the wall sections will vary from approximately 0.250 inch to 0.600 inch (.625 to 1.5 cm).

The vessel lid, cap and tub are preferably molded in a closed molding process utilizing a core and cavity, and preferably are formed by reaction injection molding (RIM). In the typical RIM process, two reactant streams are combined in a mixhead, and this mixture is then injected into a closed mold in which polymerization occurs. The RIM process can be used with resinous dicyclopentadiene polymers (including both homopolymers and copolymers), polyurethane-based resins, polyurea-based resins, or such other resins having approximately the physical properties set forth herein. Typically, when a polyurethane resin is to be prepared, a polyisocyanate (e.g., a diisocyanate) will be supplied in one reactant stream and a polyol will be supplied in the other. Typically, when a dicyclopentadiene-based polymer is prepared, one reactant stream contains both the activator and a moderator of a metathesis catalyst system, and the other reactant stream contains the catalyst. The dicyclopentadiene monomer and any comonomers used can be present in either stream, or in both. Further details for this process can be found in U.S. Patent Nos. 4,400,340; 4,436,858; 4,469,809; 4,481,344; 4,485,208; 4,507,453; 4,520,181; 4,598,102; 4,607,077; 4,657,981; 4,661,575; 4,703,098; 4,708,869; 4,710,408; 4,727,125; 4,740,537; and 5,087,343. The preferred resin for the container of the present invention is a homopolymer of dicyclopentadiene or a copolymer of dicyclopentadiene with one or more monomers having norbornene functionality, e.g., methyl norbornene and ethylidene norbornene. Such resins are crosslinked, thermoset, olefin hydrocarbon polymers.

Preferably, the container of the present invention will be molded with sufficient wall thickness to enable it to pass government qualification tests for use to transport certain hazardous liquids in commerce, such as, for example, flammable paints and adhesives and aqueous hydrogen peroxide solutions (e.g., having a 50 weight percent concentration).

In Title 49 of the Code of Federal Regulations for the U.S.A., such tests include those set forth at Paragraph 178.19-7(a)(1) (an ambient temperature drop test); at Paragraph 178.19-7(a)(2) (a cold temperature drop test); at Paragraph 178.19-7(a)(3) (a hydrostatic pressure test); at Paragraph 178.251-4(a)(2)(iii) (a stacking test); and at Paragraph 178.253-5(a)(1) (a vibration test). In general the details of those tests are as follows, along with the Federal regulation designation upon which they are based.

### Ambient Drop Test (49 CFR § 178.19-7(a)(1))

The container, filled to 98 percent capacity with water or other fluid (of at least a specific gravity of 1), must be dropped from a height of four feet (1.2 m) onto solid concrete so as to drop diagonally on the top edge or any other part considered to be constructed to a lesser strength.

Pass/Fail criteria: no leakage.

### Cold Drop Test (49 CFR § 178.19-7(a)(2))

The container, filled to 98 percent capacity with water with antifreeze or other fluid that does not freeze (of at least a specific gravity of 1), must be dropped from a height of four feet (1.2 m) onto solid concrete on any part of the container. This test must be run when the container and contents are at or slightly below 0°F. (-32 Celcius). The fluid and container must be stored at 0° (-32° C.) for a minimum of four hours preceding the test.

Pass/Fail criterion: no leakage.

### Hydrostatic Test (49 CFR § 178.19-7(a)(3))

The container must be tested and pass a 15 psig hydrostatic test, holding that pressure for a minimum of 5 minutes. If there is some initial expansion that takes place, it is permissible to supplement the volume of water to maintain the 15 psig constant, i.e., at equilibrium.

Pass/Fail criteria: no pressure drop and no leakage.

### Stacking Test (49 CFR § 178.251-4(a)(2)(iii))

The container must pass a test consisting of either one of the following:
a. Tanks loaded to their maximum authorized gross weight and stacked at least 18 feet (5.4 m) high, or
b. A load on the stacking support devices of at least three times the maximum authorized gross weight of the tank.

Pass/Fail criteria: no significant deformation of any devices or the tank under the loaded condition.

### Vibration Test (49 CFR § 178.253-5(a)(1))

The container must meet a 1-hour duration vibration test using a minimum double amplitude of 1-inch (2.5 cm) at a frequency that causes the test tank to be raised from the floor of the testing table so a piece of flat steel strap may be passed between the tank and the table. The tank must be restrained so that all horizontal motion is restricted and only vertical motion is permitted.

Pass/Fail criteria: no leakage.

The United Nations has developed the following tests for use in the certification of freestanding rigid plastic intermediate bulk containers (IBC's) for the transport of solids or liquids:

### 16.4.9.1 Bottom lift test

### 16.4.9.1.1 Applicability

For all types of IBCs which are designed to be lifted from the base, as a design type test.

### 16.4.9.1.2 Preparation of container for test

The container should be loaded to 1.25 times its maximum permissible gross mass, the load being evenly distributed. ("Maximum permissible gross mass" means the mass of the container and its service equipment and structural equipment and the maximum permissible load.)

### 16.4.9.1.3 Method of testing

The container should be raised and lowered twice by a lift truck with the forks centrally positioned and spaced at three quarters of the dimension of the side of entry (unless the points of entry are fixed). The forks should penetrate to three quarters of the direction of entry. The test should be repeated from each possible direction of entry.

### 16.4.9.1.4 Criteria for passing the test

No permanent deformation which renders the IBC unsafe for transport and no loss of contents.

### 16.4.9.3 Stacking test

### 16.4.9.3.1 Applicability

For all types of IBC that are designed to be stacked on each other, as a design type test.

### 16.4.9.3.2 Preparation of IBCs for test

The IBC should be loaded to its maximum permissible gross mass.

### 16.4.9.3.3 Method of testing

The IBC should be placed on its base on level hard ground and subjected to a uniformly distributed superimposed test load (see 16.4.9.3.4) for 28 days at 40°C. (54°F.). The load should be applied by one of the following methods:
one or more IBCs of the same type loaded to their maximum permissible gross mass and stacked on the test IBC;
appropriate weights loaded on to either a flat plate or a reproduction of the IBC's base, which is stacked on the test IBC.

### 16.4.9.3.4 Calculation of superimposed test load

The load to be placed on the IBC should be 1.8 times the combined maximum permissible gross mass of the number of similar IBCs that may be stacked on top of the IBC during transport.

### 16.4.9.3.5 Criteria for passing the test

No permanent deformation which renders the IBC unsafe for transport and no loss of contents.

### 16.4.9.4 Leakproofness test

### 16.4.9.4.1 Applicability

For those types of IBCs used for liquids or for solids loaded or discharged under pressure, as a design type test and as an initial and periodic test.

### 16.4.9.4.2 Preparation of IBCs for test

Vented closures should either be replaced by similar non-vented closures or the vent should be sealed.

### 16.4.9.4.3 Method of testing and pressure to be applied

The test should be carried out for a period of at least 10 minutes at a gauge pressure of not less than 20 kPa (0.2 bar). The air tightness of the IBC should be determined by a suitable method such as by an air-pressure differential test or by immersing the IBC in water. In the latter case a correction factor should be applied for the hydrostatic pressure. Other methods at least equally effective may be used.

### 16.4.9.4.4 Criterion for passing the test No leakage

### 16.4.9.5 Hydraulic pressure test

### 16.4.9.5.1 Applicability

For those types of IBCs used for liquids or for solids loaded or discharged under pressure, as a design type test.

### 16.4.9.5.2 Preparation of IBCs for test

Safety relief devices and vented closures should be removed and their openings plugged or rendered inoperative.

### 16.4.9.5.3 Method of testing

The test should be carried out for a period of 10 minutes applying a hydraulic gauge pressure of not less than that indicated in 16.4.9.5.4. The IBCs should not be mechanically restrained during the test.

### 16.4.9.5.4 Pressures to be applied:

(a) For IBCs for solids which are loaded or discharged under pressure: 75 kPa (0.75 bar) (gauge)
(b) For IBCs for liquids: whichever is the greatest of:
   (i) the total gauge pressure measured in the IBC (i.e. the vapour pressure of the filling substance and the partial pressure of the air or other inert gases, minus 100 kPa) at 55°C. (63°F.) multiplied by a safety factor of 1.5; this total gauge pressure should be determined on the basis of a maximum degree of filling in accordance with 16.1.6.2 and a filling temperature of 15°C. (40°F.).
   (ii) 1.75 times the vapour pressure at 50°C. (60° F.) of the substance to be transported minus 100 kPa, but with a minimum test pressure of 100 kPa;
   (iii) 1.5 times the vapour pressure at 55°C. (63°F.) of the substance to be transported minus 100 kPa, but with a minimum test pressure of 100 kPa;
   (iv) twice the static pressure of the substance to be transported, with a minimum of twice the static pressure of water.

### 16.4.9.5.5 Criteria for passing the test

No permanent deformation which renders the IBC unsafe for transport and no leakage.

### 16.4.9.6 Drop test

### 16.4.9.6.1 Applicability

For all types of IBCs, as a design type test.

### 16.4.9.6.2 Preparation of IBCs for test

The IBC should be filled to not less than 95% of its capacity for solids or 98% for liquids in accordance with the design type. Arrangements provided for pressure relief may be removed and plugged or rendered inoperative. Testing of IBCs should be carried out when the temperature of the test sample and its contents has been reduced to -18°C. (22° F.) or lower. Tests liquids should be kept in the liquid state, if necessary by the addition of anti-freeze. This conditioning may be disregarded if the materials in question are of sufficient ductility and tensile strength at low temperatures.

### 16.4.9.6.3 Method of testing

The IBC should be dropped onto a rigid, non resilient, smooth, flat and horizontal surface, in such a manner as to ensure that the point of impact is on that part of the base of the IBC considered to be the most vulnerable.

### 16.4.9.6.4 Drop height

| Packing Group II | Packing Group III |
|---|---|
| 1.2 m (4 ft.) | 0.8 m (2.7 ft.) |

### 16.4.9.6.5 Criteria for passing the test

No loss of contents. A slight discharge from a closure upon impact should not be considered to be a failure of the IBC provided that no further leakage occurs.

Preferably, the containers of the present invention are constructed of thick enough walls (considering the particular resin used) that they will pass all five of the above United Nations tests.

The minimum thickness and the desired profile of each of the parts -- vessel, lid, cap, and tub (if used) - - may vary, depending upon the strength of the resin and how well it retains its properties upon environmental weathering. The resin should have sufficient physical properties to allow the part to absorb the stress of the forces generated in the above-described qualification tests, while remaining within the elastic limits of the material during the life cycle of the part.

The plastic used to make the vessel, the lid, the cap, and the tub (if used) may, for example, have a flexural modulus of at least about 200,000 p.s.i., e.g., about 200,000 to 1,000,000 p.s.i. (ASTM Method D 790); a tensile modulus of at least about 200,000 p.s.i., e.g., about 200,000 to 1,000,000 p.s.i. (ASTM Method D 638); and a Rockwell hardness of at least about R-100, e.g., in the range of about R-100 to R-130 (ASTM Method D 785).

The plastic also will preferably have a flexural strength of at least about 8,000 p.s.i., e.g., in the range of about 8,000 to 20,000 p.s.i. (ASTM Method D 700); and a tensile strength of at least about 5,000 p.s.i., e.g., about 5,000 to 12,000 p.s.i. (ASTM Method D 638).

### THE DRAWINGS

The accompanying drawings depict preferred embodiments of the container of the present invention. Referring to the drawings:
**Fig. 1** is an elevation view (partially broken-away and partly disassembled) of a 360-gallon (1,400 liter) container of the present invention, resting on a wooden pallet;
**Fig. 2** is a reduced-size, overhead, perspective view of the lid;
**Fig. 2A** is a reduced size perspective of a combined dip stick **86** which is formed as part of the bungplug **13B** of **Fig. 2**;
**Fig. 3** is a reduced-size, overhead perspective view (partially broken away) of the vessel portion of the container and the wooden pallet as depicted in **Fig. 1**;
**Fig. 4** is a bottom view of the vessel portion of the container shown in **Fig. 1**;
**Fig. 5** is an enlarged front view (partially broken-away) of the region of the vessel of **Fig. 4** at which the recess in the wall is located;
**Fig. 6** is an enlarged detail view, in cross-section, of the portion of the lateral wall of the container depicted in **Fig. 1** containing the offset sloped shoulder;
**Fig. 7** is an enlarged detail view, in cross-section, of the lateral wall of the container depicted in **Fig. 1** where the bottom and the wall meet;
**Fig. 8** is an enlarged detail view of a cross-section of the bottom wall of the vessel depicted in **Fig. 4**, taken along line **8-8**, where the triangular reinforcing fin joins the bottom wall;
**Fig. 9** is an enlarged detail view of the portion of the vessel depicted in **Fig. 4** at which a vertical rib meets a triangular reinforcing fin at the convergence of the vessel's lateral wall and bottom;
**Fig. 10** is a semi-schematic representation of three of the lids depicted in **Fig. 2**, stacked and nested one on top of the other;
**Fig. 11A** is a perspective view of the upper right corner of the lid depicted in **Fig. 1**, equipped with a tie-down feature;
**Fig. 11B** is an enlarged detail view, in cross-section, of the lid depicted in **Fig. 1** and the complementary section of a lid to go therewith;
**Fig. 11C** is a enlarged detail view, in cross-section, of the vessel and lid in **Fig. 11B**, but with the lid screwed down onto the top of the vessel; and equipped with the tie down feature;
**Fig. 12A** is a perspective view of a portion of the lid in **Fig. 2**, equipped with the concentric ribs and channels;
**Fig. 12B** is an enlarged detail view, in cross-section, of the lid depicted in **Fig. 12A**, taken along line **12B-12B**;
**Fig. 13** is a front view of a tub for use with the container shown in **Fig. 1**;
**Fig. 14A** is a semi-schematic, cross-sectional representation of the portion of the container including the drain valve, taken along the line **14-14** in **Fig. 13**, nesting on the lid of another similar container;
**Fig. 14B** is a semi-schematic, cross-sectional representation of the portion of the container opposite the drain valve, taken along the line **14-14** in **Fig. 13**, nesting on the lid of another similar container;
**Fig. 15** is a bottom view of the tub depicted in **Fig. 13**;
**Fig. 16** is a reduced-size bottom view of an alternative configuration for the tub pallet shown in **Fig. 15**, designed to permit four-directional access by a forklift's tines;
**Fig. 17** is a reduced-size view of three of the vessels depicted in **Fig. 1**, nested inside one another; and
**Fig. 18** shows schematically, in reduced size, a front view of two of the containers of **Fig. 1** sitting in the tubs of **Fig. 13** and stacked one on top of the other.
**Fig. 19** is a front view of the container in which the bottom and the lateral wall **21C** have been modified to include forklift pockets **56** to create an integral pallet.
**Fig. 20** is an enlarged bottom view of the container as shown in **Fig. 19** designed to permit four-directional access by forklift tines **56**.
**Fig. 21** is an enlarged view of a portion of the lid and cap depicted in **Fig. 2**, showing a tamper-proof locking ring for the cap.
**Fig. 22** is an exploded partial view of the vessel and tub combination depicted in **Figs. 13**, **14A-B**, and **18**.

### DETAILED DESCRIPTION OF THE INVENTION AND PREFERRED EMBODIMENTS OF IT

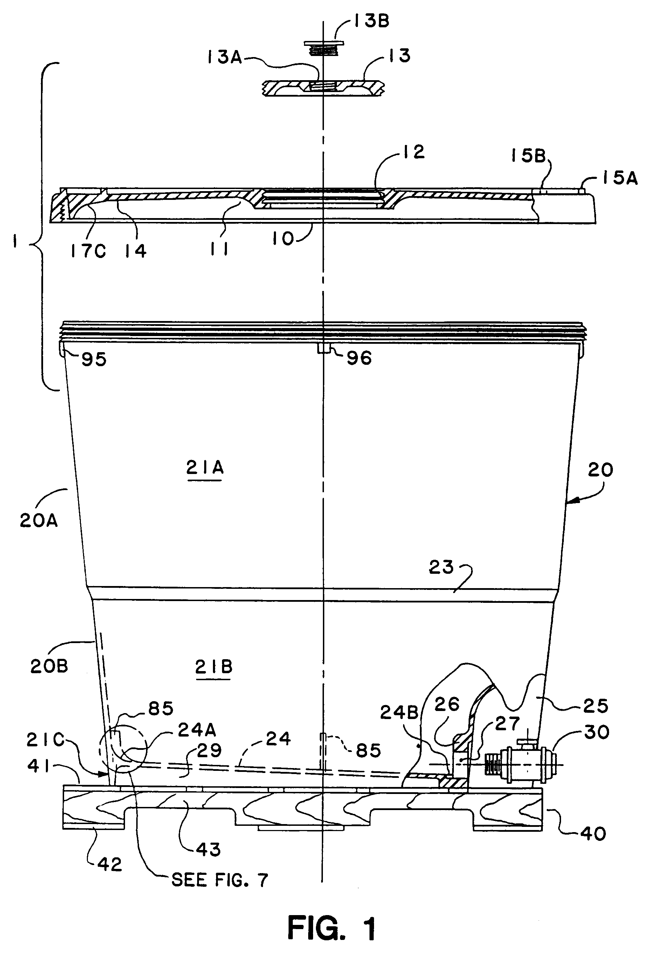

Referring to **Fig. 1** of the drawings, a transportable, self-supporting container with a three hundred and sixty (360) gallon (1,400 liter) capacity, indicated generally as **1**, is formed of a vessel **20** and a lid **10**. Vessel **20** has a lateral wall **21A-C** and a bottom **24**. Bottom **24** has a downward slope of one degree 33 minutes. The height of vessel 20 is forty-six and one-half (46.5) inches (116.25 cm), its diameter at the top is fifty-three (53) inches (132.5 cm), and its diameter at its base is forty-four (44) inches (110 cm). Lid **10** has a diameter of fifty-five (55) inches (137.5 cm) and is fitted with a twelve (12) inch (30 cm) diameter, threaded fill opening **12**. Container **1** is mounted on a pallet member **40** with a top surface **41** and a bottom surface **42** and support members **43** spaced apart as desired. Container **1** is capable of being stored or transported while stacked within the limitations of certification obtained. Although the pallet member **40** depicted is wooden, it may be constructed either of plastic or of metal as well. Vessel **20** and lid **10** are formed by the RIM process, using poly(dicyclopentadiene) and are secured to pallet member **40** by two or more inelastic securing straps (described below).

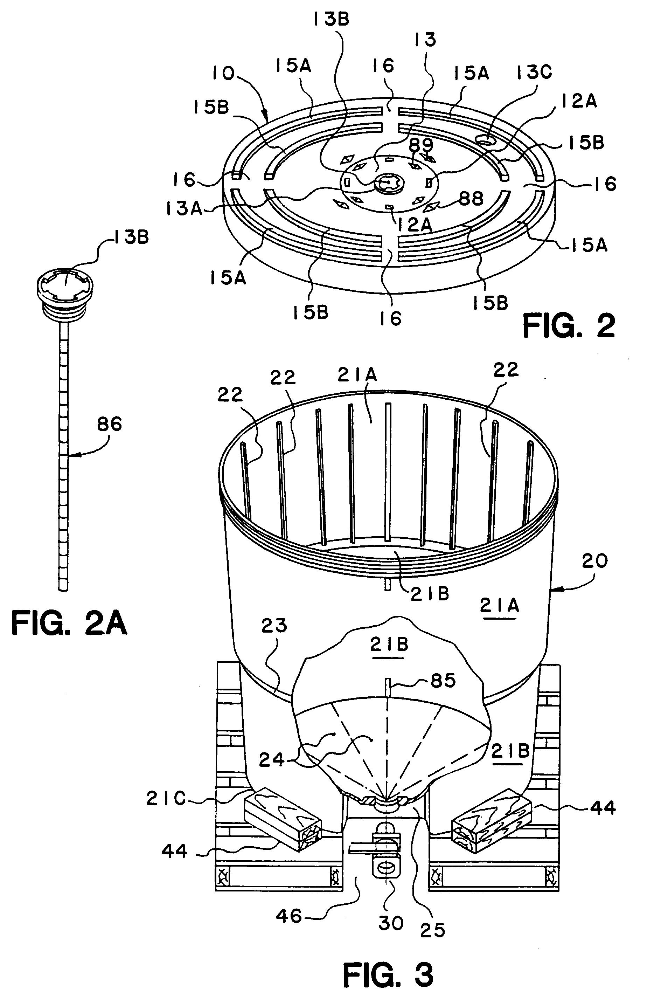

As shown in **Figs. 1** and **2**, lid **10** is round and has a centrally located, threaded fill opening **12**. Fill opening **12** is fitted with a fill opening cap **13**. As shown in **Fig. 2**, fill opening cap **13** may be equipped with one or more bungplugs **13B**, which permit container **1** to be drained, filled, or have its vacuum or pressure released without loosening or removing cap **13**. Cap **13** is formed with one or more female-threaded bungholes **13A** of any size up to four (4) inches (10 cm) to receive the male-threaded bungplug **13B**, as well as with lug recesses **12A** to facilitate removal from the mold and tightening in opening **12**. Although wall **21A-C** may be sufficiently translucent to permit the level of liquid or other contents to be determined, container **20** may be equipped with a graduated dip stick **86**, depicted in **Fig. 2A**, that mates with bunghole **13A** or other bungholes **13C** for determining the volume of liquid held within container **20**. Sight glass level indicators or other common level indicators may also be utilized.

Lid **10** is equipped with a ring-shaped expansion vault **11** which is incorporated into the lid's inner surface **14**. The expansion vault **11** is concentric with the circumference of lid **10** and surrounds fill opening **12**. The expansion vault **11** has a height of approximately one (1) inch (2.5 cm). When vessel **20** is full to the fill opening **12**, the expansion vault **11** creates an air pocket within container **1**. If the contents of container **1** expand due to changes in ambient temperature or due to external pressure on vessel lateral wall **21A** or **21B** or on lid **10**, the air in the pocket is compressed somewhat, thereby lessening the likelihood that the container will rupture. Also, a pressure and/or vacuum release vent (not shown) will normally be located in the expansion vault or in the cap **13**.

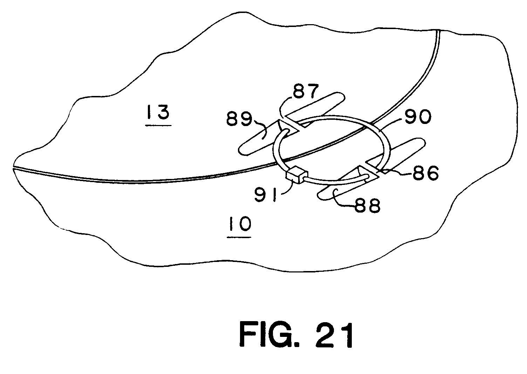

Referring to **Fig. 21**, the rib members 86 and 87 in the elongated recesses 88 and 89, respectively, in lid **10** and cap **13** provide means for holding a tamper-proof locking ring 90, made out of metal or plastic, e.g., polyethylene. To install the ring a hole is drilled or punched through each rib member, the open ring is threaded through the holes, and the ends of the ring are then closed with clamp member 91.

Referring to Figs. 1 and 3, a similar tamper-proof locking ring (not shown) may be used to connect circular rib 15A on lid 10 to one of the protuberances 95 on the upper wall 21A of vessel 20.

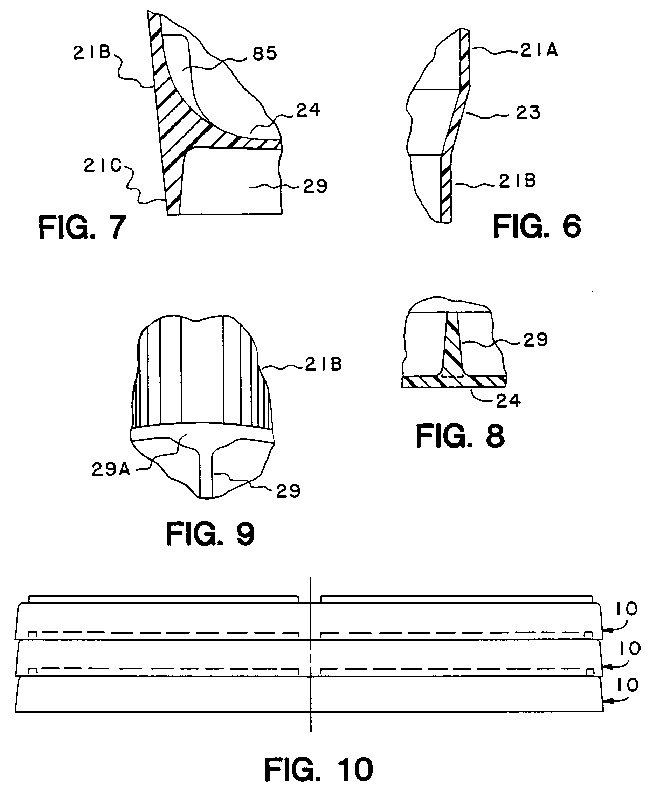

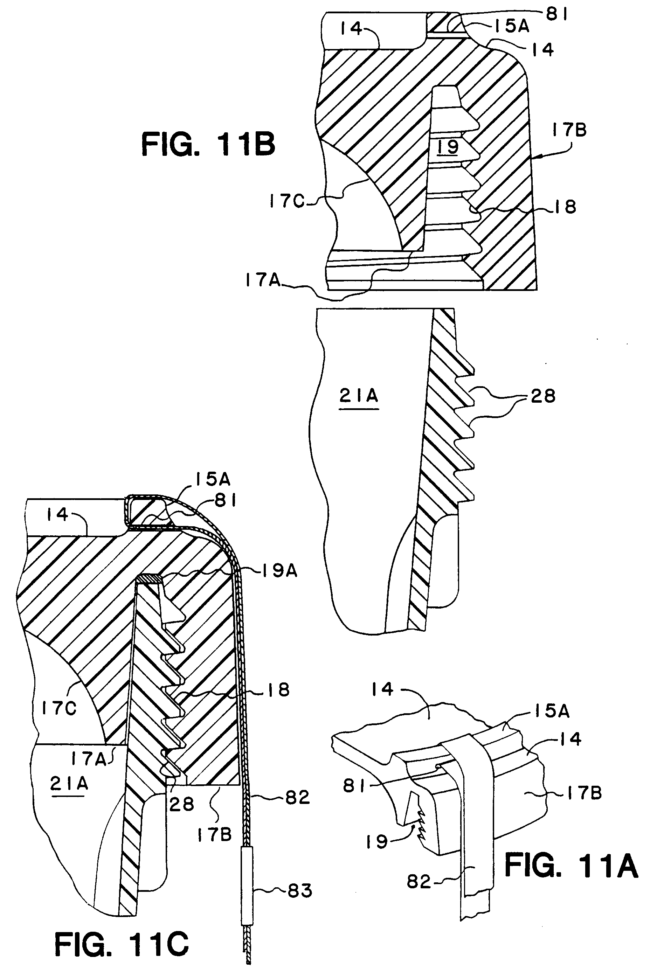

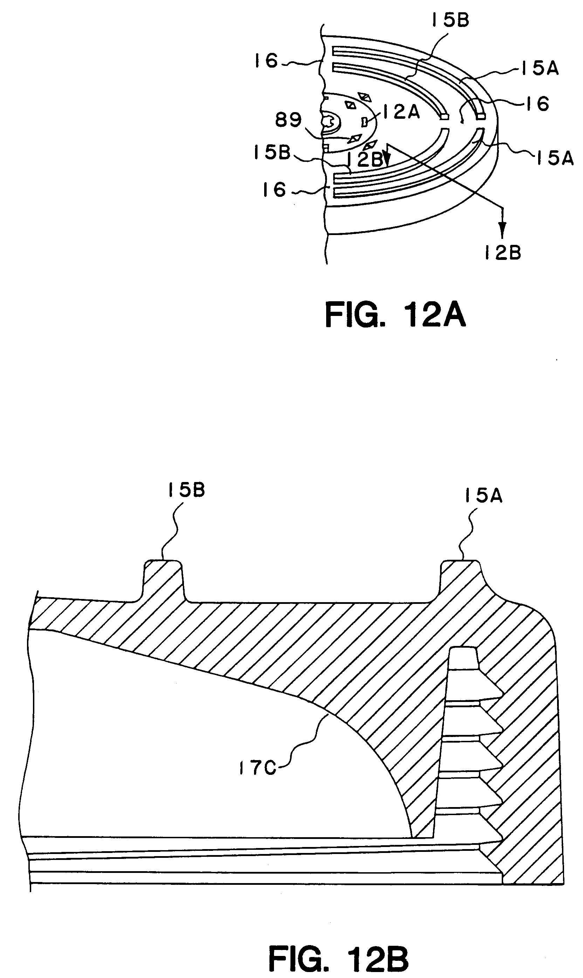

Referring to **Figs. 11A-C**, and **12A-B**, lid **10** has an interior circumferential wall section **17A** and an exterior circumferential wall section **17B** that descend from lid surface **14**. Wall sections **17A** and **17B** define an annulus **19**. Within annulus **19**, exterior wall section **17B** is formed with circumferential female threads **18**. Threads **18** correspond to and mate with circumferential male threads **28** on the exterior surface of the upper vessel wall **21A**. The width of annulus **19** is approximately equal to the width of upper vessel wall **21A**, thus improving the seal between lid **10** and vessel **20** as depicted in **Fig. 11C**. A compression seal **19A** is provided to ensure certified performance. In addition to sealing, interior wall section **17A** also serves to protect threads **18** when lids **10** are stacked for shipment, as shown schematically in **Fig. 10**, and to prevent disengagement of threads **18** and **28** from a horizontal force when lid **10** and vessel **20** are assembled.

Referring again to **Figs. 11A** and **11B** of the drawings, container **1** can be secured to pallet member **40** by means of inelastic securing straps **82**. Lid **10** can be formed with a plurality of fastening slots **81** spaced about the outer concentric vertical rib **15A** of lid **10** (shown in the drawings) or projecting from the exterior of wall section **17B** (not shown). To secure container **1** to pallet member **40**, one end of securing strap **82** is looped through fastening slot **81** and is secured to itself by means of a binding band **83**. The other end of securing strap **82** is secured to a tie-down point (not shown) on pallet member **40**.

Alternatively, or in addition thereto, securing wires (not shown) can be attached to the pallet and to bosses 96 (see Fig. 1) on opposite sides of the top wall 21A of vessel 10.

Preferably, lid **10** is molded with one or more top ribs **15A-B**, as depicted in **Figs. 2** and **12A-B**, one of which **15A** projects upward from annulus **19** and inby (meaning adjacent and inboard of) exterior wall section **17B**. During the RIM molding of lid **10**, female threads **18** tend to shrink into the core mold (not shown). The presence of top rib **15A** reduces this shrinkage, thus simplifying the removal of lid **10** from the mold. A plurality of cross-channels **16** are spaced about the circumference of top ribs **15A-B**, as shown in **Figs. 2** and **12A-B**. These lid rib channels **16** make it easy to hold lid **10** against rotation as the threaded portion (the core) of the lid mold is spun out of lid **10**. Also, channels **16** can be used to rotate lid **10** on and off vessel **20**.

As shown as **Figs. 1** and **3**, vessel **20** is inclined inwardly from top to bottom so as to define an upper truncated conical section **20A** and a lower truncated conical section **20B**. Upper truncated conical section **20A** is defined by lateral wall **21A**, and lower truncated conical section **20B** is defined by lateral wall **21B**. The angle of inclination of lateral walls **21A** and **21B** is approximately five (5) degrees. Although not apparent from the drawings, the thickness of lower lateral wall **21B** is greater than the thickness of upper lateral wall **21A**. Thus, the thickness of lateral wall **21A** is a minimum of 0.145 inch (.363 cm), while the thickness of lateral wall **21B** is a minimum of 0.188 inch (.47 cm). The junction of these two conical sections is a sloped shoulder **23**, shown in detail in **Fig. 6**. Lateral wall **21A** is strengthened with a plurality of integral vertical reinforcing ribs **22**. Ribs **22** are convex on the interior and flush on the exterior wall surfaces.

Lower truncated conical section **20B** has a recess **25** at the base of its lateral wall **21B**. Recess **25** encloses and protects a female-threaded discharge hole **27** and a male-threaded drain valve **30**. Drainage hole **27** is located at substantially the same level as the lowest point inside vessel **20**, being the bottom of well **24B**. Recess wall **26** surrounding drainage hole **27** is 1.35 inches (3.38 cm) thick or approximately six (6) times the thickness of lateral wall **21B** substantially everywhere else in vessel **20**. (Fig. 1 is not drawn to scale, so the ratio appears in it to be less.) When molded of poly(dicyclopentadiene), the minimum desired thickness of the wall through which the drainage hole is tapped will be approximately one inch (2.5 cm). For smaller containers this will usually be at least three times the average thickness of the wall elsewhere in the lower conical section.

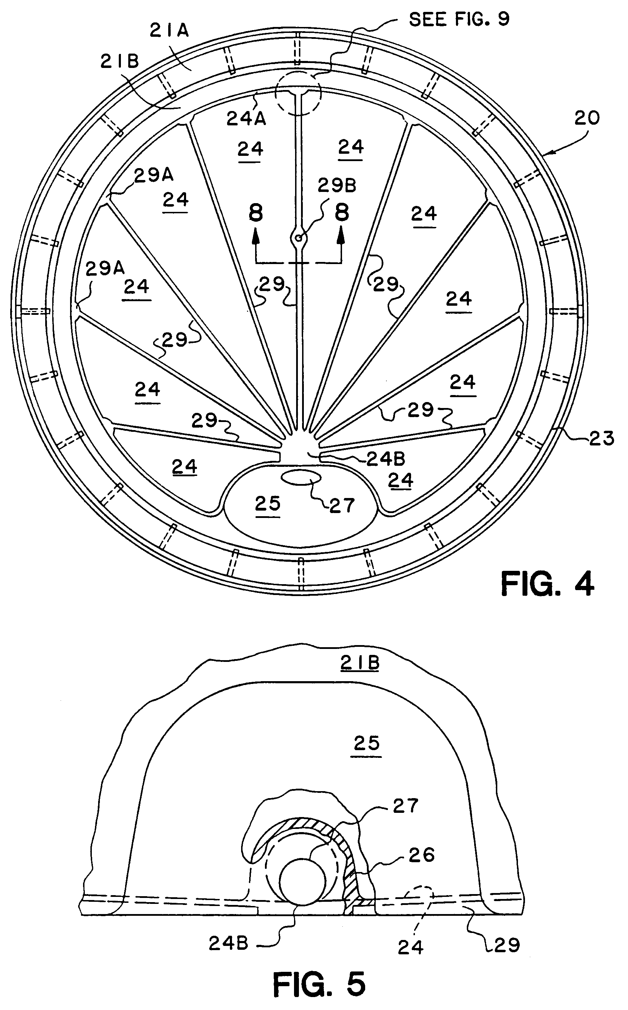

Bottom **24** joins to lateral wall **21B** at junction **24A** and slopes downward to a sump **24B** in bottom **24**, immediately adjacent to drainage hole **27**. As shown in **Figs. 4, 7** and **8**, triangular reinforcing fins **29** extend from bottom **24** and are substantially flush on their lower edges with the bottom of lateral wall section **21C**. These fins **29** extend radially from recess **25** and sump **24B**, as depicted in **Figs. 3** and **4**. Each reinforcing fin **29** joins a reinforcing web **29A** at the junction of wall **21B** with bottom **24**. This junction is shown in detail in **Fig. 9**. Fins **29** prevent the bottom **24** of vessel **20** from bulging downward when the vessel is full and combined with lower wall **21C** permit vessel **20** to stand upright despite the sloped bottom **24**. They also relieve some of the compression forces on the bottom edge of lateral wall **21C**.

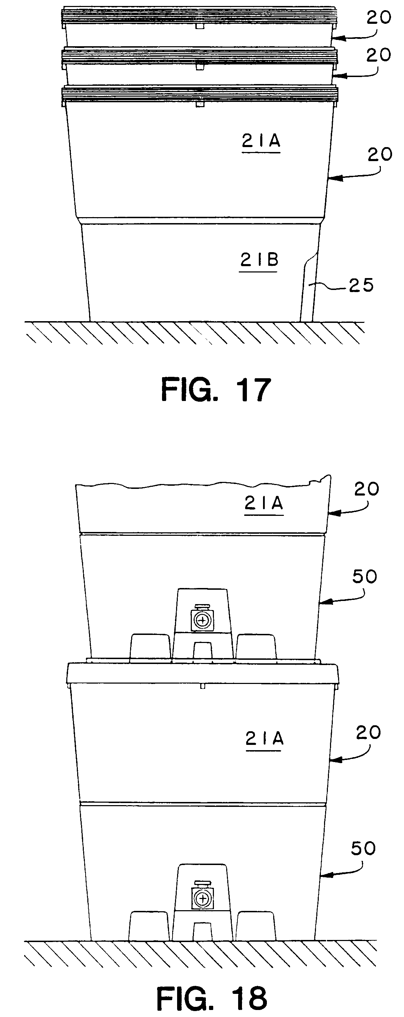

Vessels **20** may be stacked and nested, as depicted in **Fig. 17**, for convenient storage and transportation. When vessels **20** are nested, the top edge of lateral wall **21A** of each nested vessel **20** is approximately five (5) inches (12.5 cm) above the top edge of lateral wall **21A** of the next lower vessel **20**. To prevent the vessels from clinging tightly together when nested, and to help keep them level, each vessel **20** is provided with three gussets **85** (shown in **Figs. 1, 2**, and **14B**) which are spaced around the circumference of the interior bottom of the vessel at approximate 90 degree intervals from the drainage valve recess **25**. The top surfaces of the gussets define a horizontal plane. When two or more vessels are nested inside one another, the bottom edge of the lateral wall **21C** of the inner vessel rests on the top surfaces of the gussets **85** of the outer vessel, thereby holding the inner vessel level and preventing it from nesting so deep inside the outer vessel as to become stuck there.

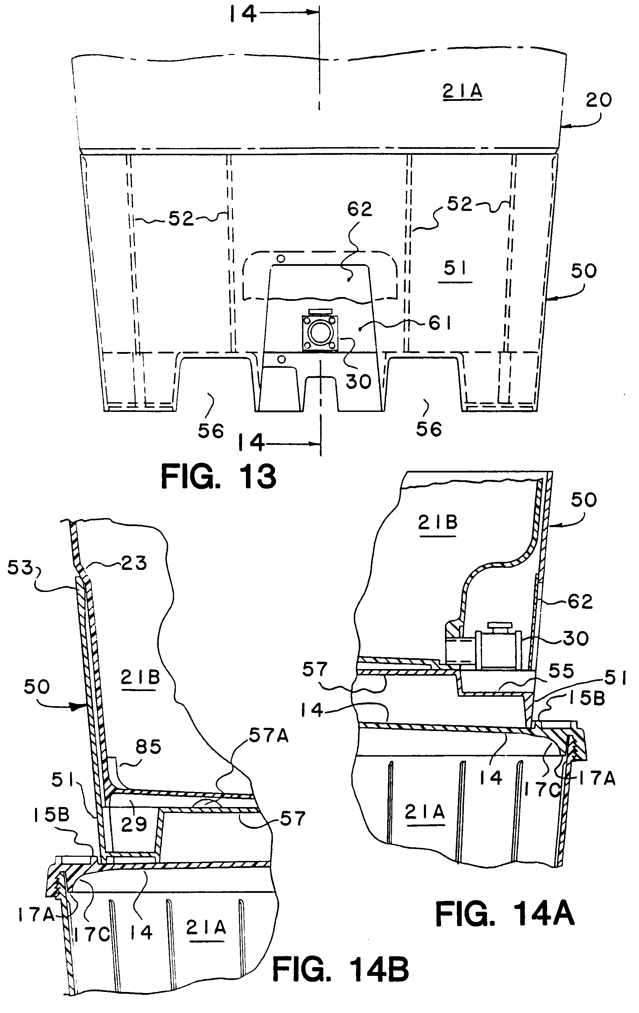

Container **1** may be mounted on pallet member **40** or it may be nested in a tub **50**, as shown in **Figs. 13**, **14A-B** and **18**. If container **1** is mounted on pallet member **40**, it preferably will be secured to pallet member **40** by means of inelastic securing straps **82**. Further, container **1** preferably will be positioned on the pallet member's top surface **41** by a plurality of positioning blocks **44** which abut vessel **20** at its base around its circumference, and which are fastened to the pallet member, as shown in **Fig. 3**. Pallet member **40** is constructed with a valve access cut-out **46** immediately before recess **25** and drain valve **30**. Cut-out **46** permits easy access to drain valve **30** when draining container **1**. Moreover, cut-out **46** prevents drain valve **30** from pressing against pallet member top surface **41** if a valve greater than two (2) inches (5 cm) in diameter is utilized.

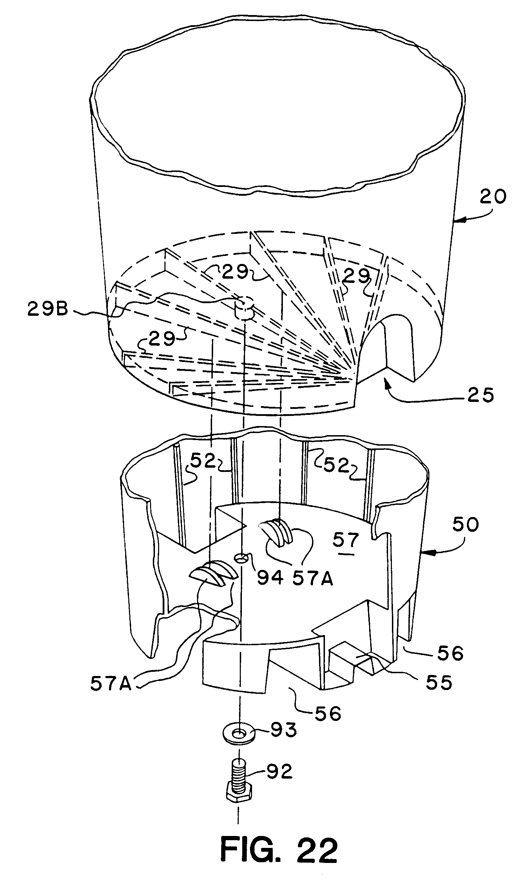

Referring to **Figs. 13**, **14A-B**, and **22** of the drawings, tub **50** is comprised of a lateral wall **51** and a bottom **57**. The thickness of lateral wall **51** is a minimum of 0.250 inch (.625 cm). Lateral wall **51** extends below bottom **57,** such that bottom **57** is approximately five (5) inches (12.5 cm) above the bottom edge of lateral wall **51**. The height of lateral wall **51** above bottom **57** is between approximately one-third and one-half the height of vessel **20** and corresponds to the height of lateral wall **21B**. Tub **50** is formed with a widened rim zone **53** that abuts sloped shoulder **23** of vessel **20**. Tub **50** also has vertical ribs **52** that are flush on the exterior surface of the tub and convex on the interior surface of lateral wall **51**. Each of two of the triangular bottom fins **29** of vessel **20** sits between a pair of short fins **57A** on the interior bottom of tub **50** to prevent the vessel from rotating within the tub. Tub **50** is bolted to the bottom of vessel **20** at boss **29B** in **Fig. 4** to prevent disengagement. From the underside bottom **57** of tub **50**, bolt 92 passes through washer 93 and hole 94 and is anchored in boss **29B**, which is partially drilled and tapped, or a self-tapping bolt is utilized.

As shown in **Figs. 13** and **14A-B**, tub **50** is equipped with a sump **55** and a valve access opening **61** to permit easy access to valve **30**. Valve access opening **61** is equipped with a valve access cover **62** which protects valve **30** from damage during transportation. Valve access cover **62** is secured to tub **50** by sliding between the walls of the vessel and tub and is constrained laterally by two of the vertical interior ribs **52** of the tub.

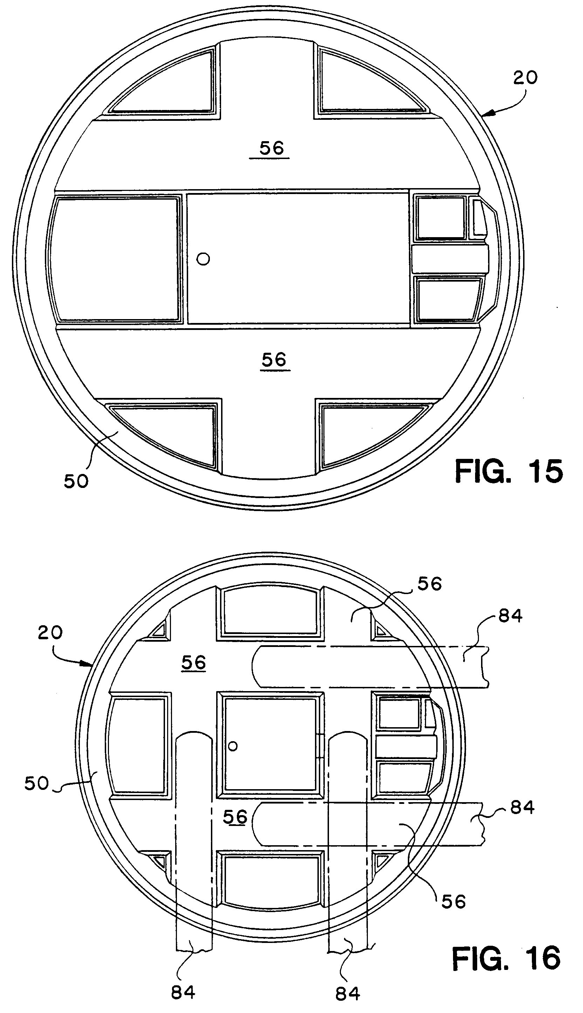

Tub **50** is also equipped with a plurality of forklift entry pockets **56** which permit two-way entry of a forklift's tines, as shown in **Fig. 15**, or four-way entry of a forklift's tines **84**, as shown in **Fig. 16**. Entry pockets **56** provide an entry clearance of approximately five (5) inches (12.5 cm) above a flat surface and approximately four and one-half (4.5) inches (11.25 cm) between stacked containers.

When two or more containers **1** equipped with the tubs **50** are stacked, the bottom edge of lateral wall **51** of the top container nests within concentric rib ring segments **15B** in the lid surface **14** of lower container **1**, as shown in **Fig. 14A-B**. In order to prevent the weight of an upper container **1** from causing the lid **10** of a lower container **1** to sag excessively, lid **10** is molded with a continuous concentric strengthening gusset **17C** projecting from lateral wall **17A** to approximately the level of lower lid surface **14**. This positioning as shown in **Figs. 14A-B** transmits most of the weight of a stacked container directly to lateral wall **21A** of the lower container.

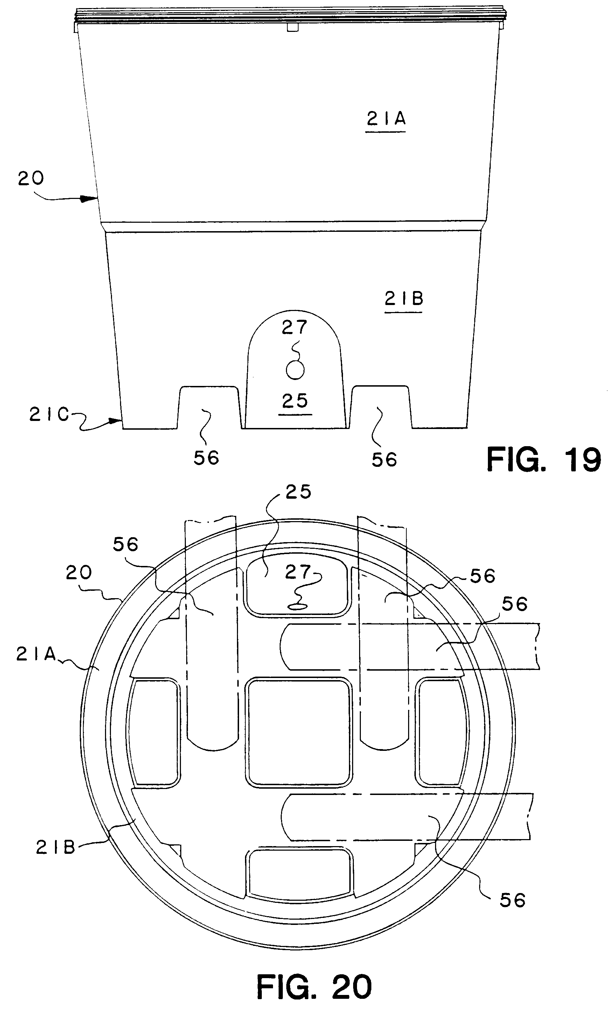

Also contemplated is an embodiment of the invention in which bottom **24** and lateral wall **21C** are modified by the addition of forklift pockets **56**, as shown in **Fig. 19** or **20**, to create an integral pallet.

The plastic used to make cap **13**, lid **10**, vessel **20**, and tub **50** may, for example, be poly(dicyclopentadiene) having a flexural modulus of about 270,000 p.s.i. and flexural strength of about 9800 p.s.i. (ASTM Method D 790), a tensile modulus of about 250,000 p.s.i. and a tensile strength of about 5800 p.s.i. (ASTM Method D 638), and a Rockwell hardness of about R-115 (ASTM Method D 785).

Container **1** is suitable for the transportation and storage of liquids, greases, prills or dry powders or a combination thereof with appropriate sloped vessel bottom. When mounted on pallet member **40** or in tub **50**, or when modified to include an integral pallet, as shown in **Fig. 19**, the container may be stacked when full and moved by forklift. Because of its easy disassembly, it can be used, cleaned, refilled, and re-used.

The uniqueness of the preferred containers of the present invention is in part due to the resin of which they are made. The molding of a free-standing vessel with a full-diameter lid, sloped-interior bottom, and with controlled variable wall thicknesses in sizes large enough to hold, say, upwards of 30 gallons (110 liters) of contents, and meet critical transportation tests and criteria is so technically and economically difficult if attempted by either blow molding or injection molding, or rotational molding methods as to be considered practically impossible. Part of the problem is due to the size of the parts, which can weigh, say, 60 to 80 lbs. (27.2 to 36.4 kg) apiece, and part is caused by the geometry of the parts.

Traditional injection molding is similar to RIM molding in that it is a closed-mold process employing male and female mold halves; However, the pressure requirements of pushing 60 to 80 pounds of a viscous thermoplastic melt through large-surface-area molds makes the injection molding process economically and technologically prohibitive for producing the containers of the present invention.

Much of the structural stability, utility, and economy of the present containers comes from the ability to mold thick and thin wall sections in the same part. The value of this ability can be appreciated by considering one example: a 360 gallon (1,400 liter) vessel constructed according to the present invention. The nominal floor thickness of such a container is preferably about 0.315 inch (.788 cm). The nominal thickness of the lower portion of the container walls is preferably about 0.200 inch (.5 cm). This thickness was chosen to resist buckling of the container upon impact and to provide additional protection against accidental impact by lift truck forks. The nominal wall thickness of the upper portion of the container walls (between the reinforcing ribs) is preferably only about 0.160 inch (.4 cm). This portion of the container undergoes little stress during a drop test and, therefore, is preferably reduced in thickness, relative to the rest of the container, for economy reasons. The internal ribs are provided to withstand stacking loads. The valve block is preferably about 1.35 to 1.50 inches (3.38 to 3.75 cm) thick to permit thread tapping for a 2-inch or 3-inch (5 or 7.5 cm) valve. Applicants have found these thickness variations to be possible using RIM molded poly(dicyclopentadiene).

In injection molding of a part having such a variation in thicknesses, stresses are created in the molded part due to uneven cooling of polymer melts and differential shearing of the melt as it passes through mold cavities of uneven thicknesses. The result of these differential stress levels is nonuniform shrinkage and subsequent distortion. A thick section, such as that necessary in the valve area of the present container, would likely be of inconsistent thickness if formed by the injection molding process.

Another unique quality of a metathesis-polymerized dicyclopentadiene polymer is the high degree of unsaturation in the polymer. This unsaturation, in many instances, aids in the chemical resistance of the polymer. The high percentage of double bonds present in the polymer results in unsaturation at the polymer surface. These double bonds are highly reactive. When DCPD polymer is exposed to a chemical reagent containing reactive functional groups, the double bonds at the polymer's surface can quickly react with the reagent and form a new surface that limits diffusion of the reagent into the bulk of the polymer matrix. The reaction and consequent improved chemical resistance is similar to that shown by aluminum, in forming protective aluminum oxides, and copper, in forming a protective, green-colored patina.

A resin of which intermediate bulk containers have heretofore been commonly made is polyethylene. Poly(dicyclopentadiene) (PDCPD) has approximately a 50-Fahrenheit-degree (10°C.) higher maximum-use temperature than polyethylene. This enables our PDCPD containers to retain their beneficial properties longer when the container is exposed to conditions present in a warehouse fire prior to activation of a sprinkler system. While other thermoplastic materials may have higher thermal properties than PDCPD, few are less expensive than PDCPD and all are subject to the limitations cited in the previous paragraphs.

Another relevant aspect of thermal performance is the insulating nature of polymers vs. metals. This again has the most benefit when the container is subject to warehouse fire conditions. High conductivity (e.g., as for steel or aluminum) increases the risk of catastrophic container failure due to rapid heating of the container contents and subsequent increasing of liquid vapor pressures above the vessel's pressure rating. On the other hand, the PDCPD container is a poor (slower) conductor of heat and, therefore, often generates less internal pressure than corresponding steel containers. When measured in the temperature range of about 50 to 300°F. (10°C. to 150°C.), the thermal conductivity of Type 430 stainless steel is approximately 13 times that of PDCPD, and that of aluminum is approximately 10 times higher than the stainless steel.

Although polyethylene also has a lower thermal conductivity than steel, due to its lower use temperature range, it is not likely to have similar benefits over steel containers as those afforded by PDCPD. Polyethylene loses strength rapidly as ambient temperatures approach sufficient levels to activate a sprinkler system.

Temperature fluctuations of the container, and subsequently its contents, can also affect adversely the quality of the product transported or stored in the container.

Reactive polyester resins, for example, are often transported and stored in solution in styrene in stainless steel containers. If the container is left in the sun, the steel can get as hot as 140°F. (60.5°C.) This causes the contents to form a gel that tends to stick to the walls of the vessel. A secondary problem results when the atmospheric temperatures change during a 24-hour cycle. The styrene monomer vapor in the head space of a nearly full container will condense as droplets on the closed metal lid as it cools at night. Because there are no inhibitors present there, the styrene homopolymerizes there, forming polystyrene stalactites on the lid. These become very difficult to remove, but if they are not removed, they will continue to grow, causing more serious problems. The cleaning process to keep these conditions under control gets very expensive. This has included introducing acetone to the empty containers in order to prevent the particle formation. This procedure results in a hazardous waste stream and thus a serious disposal problem. It is believed that these problems will be alleviated by the higher insulation value of PDCPD.

## Claims

1. A transportable, plastic, self-supporting container comprising:
- a rigid, round plastic vessel (20), said vessel having a bottom (24), a lateral wall (21A, 21B) which comprises a recess (25) adjacent to said bottom (24) and which is thicker at said recess (25) than the thinnest thickness elsewhere, and an opening in the top and said vessel (20) being molded in one piece and comprising a variable wall thickness; and
- securing means located on a lid (10) that fits said opening,
- corresponding securing means located on said vessel (21A, 21B), such that said corresponding securing means on said vessel (21A, 21B) mate with said securing means on said lid (10) to hold said lid (10) to said vessel opening (20);
**characterized** in that
a) said opening is a round, full-diameter opening;
b) the securing means on said vessel (21A, 21B) are located on said lateral wall;
c) said lid has at least one threaded fill opening (12) therein;
d) the container includes a threaded cap (13) that mates with said threads in said fill opening (12) in said lid (10);
e) said lateral wall (21A, 21B) is inclined inwardly from top to bottom (24);
f) the inside surface of said bottom slopes downward to the recess (25); and
g) said lateral wall (21A, 21B) is at least about three times thicker at said recess (25) than the thinnest thickness elsewhere.

2. The container of claim 1, wherein said lateral wall (21A, 21B) has an upper truncated conical section (20A) and a lower, set-back truncated conical section (20B), both said conical sections (20A, 20B) being sections of right circular cones.

3. The container of either of claims 1 or 2, wherein said lateral wall (21A, 21B) has a plurality of solid vertical ribs (22) on at least one of the inner and the outer surfaces of said wall.

4. The container of any of the foregoing claims, wherein said securing means located on said wall (21A, 21B) and said corresponding securing means located on said lid (10) are circumferential threads (18, 28).

5. The container of claim 4, wherein said threads (18, 28) on said lid (10) are in a narrow annulus (19) defined by parallel, inner and outer circumferential wall sections projecting downward from the underside of said lid (10) and separated by a width approximately the same as the width of said lateral wall (21A, 21B) at its top.

6. The container of claim 5, wherein said threads (18, 28) on the top of said wall are male threads (28).

7. The container of any of the foregoing claims, wherein said vessel (20) has a capacity in a range of 110 to 3800 liters (30 to 1000 gallons).

8. The container of claims 1 to 6, wherein said vessel (20) has a capacity in a range of about 210 to 1900 liters (55 to 500 gallons).

9. The container of claim 1, wherein said recess (25) of said wall (21A, 21B) has a female-threaded, horizontal discharge hole (27) therethrough, suitable for receiving a male-threaded dispensing device (30).

10. The container of any of the foregoing claims, wherein said plastic has a flexural modulus of at least about 1379 N/mm² (200.000 p.s.i.) (ASTM Method D 790), a tensile modulus of at least about 1379 N/mm² (200.000 p.s.i.) (ASTM Method D 638) and a Rockwell hardness of about R-100 to R-130 (ASTM Method D 785).

11. The container of any of the foregoing claims, wherein said vertical ribs (22) of said vessel (20) are convex on the inner surface of the wall (21A, 21B) and flush on said outer surface of said wall.

12. The container of claim 11, wherein said vertical ribs (22) are convex only on said inner surface of the wall of said upper conical section.

13. The container of any of the foregoing claims, wherein said wall (21A, 21B) has an angle of inclination within a range of about 2 to 10 degrees.

14. The container of any of the foregoing claims, wherein said underside of said bottom (24) of said vessel (20) has a plurality of downwardly projecting, triangular reinforcing fins (29), each fin (29) having a top edge and a bottom edge, such that said fins extend from the bottom (24) of the container and are substantially flush on their bottom edges with said lateral wall's bottom edge.

15. The container of any of the foregoing claims, wherein the thickness of said wall (21A, 21B) at its thinnest point is within a range of about 0.145 to 0.380 inch (0.36 to 0.88 cm).

16. The container of any of the foregoing claims, wherein said lid (10) has at least one expansion chamber therein that will trap a pocket of air when said container is filled with a liquid to said fill opening's bottom.

17. The container of any of the foregoing claims, wherein the upper side of said lid (10) has one or more concentric external ribs (15A, 15B).

18. The container of claim 1, wherein said cap (13) has a threaded bunghole (13A) therein and a threaded bung (13B) to plug said bunghole, and wherein said threaded fill opening (12) has an inwardly projecting lip for the bottom of said cap (13) to seat against, thereby permitting said fill opening threads and said cap threads to be sealed from contact with the contents of said vessel.

19. The container of any of claims 16 to 18, wherein said expansion chamber in said lid (10) is shaped as a vaulted indentation (11) that is concentric with said lid's circumference.

20. The container of claims 1, 15 or 19, wherein said plastic is selected from a group consisting of dicyclopentadiene polymers, polyurethane and polyurea.

21. The container of claim 20, wherein said plastic is poly (dicyclopentadiene).

22. The container of any of the foregoing claims, wherein said vessel (20) has a capacity in the range of 760 to 1900 liters (200 to 500 gallons).

23. The container of any of the foregoing claims, wherein the ratio of the height of said vessel (20) to the diameter of said vessel at its bottom (24) is within a range of about 1:1 to 2:1.

24. The container of any of the foregoing claims, wherein said lateral wall (21A, 21B) has a lower section (20B) which extends below said vessel's bottom (24), and said lower section (20B) includes forklift pockets (56), permitting at least two-way entry by a forklift's tines (84).

25. The container of claim 22 or 24, wherein said forklift pockets (56) in said wall's lower section (20B) permit four-way entry by a forklift's tines (84).

26. The container of any of claims 9 to 23, additionally comprising a rigid, round, plastic tub (50) molded in one piece, said tub (50) having a bottom (57), a lateral wall (51), an open top, and an access opening to the dispensing device, and being of a shape and size that permit said vessel (20) to sit inside said tub (50), said lateral wall (51) of said tub (50) extending below said tub's bottom (57) and including forklift pockets (56) permitting at least two-way entry, and the height of said tub's wall (51) above its bottom (57) being about 33 to 50 percent of the height of said vessel's wall (51) above its bottom (57) such that the top of said tub's lateral wall (51) abuts a sloped shoulder (23) in said vessel's wall (21A, 21B) formed by said upper truncated conical section's (20A) junction with said lower truncated conical section (20B).

27. The container of any of the foregoing claims, wherein the underside of the lid (10) is molded with a thick concentric gusset (17C) around the outer perimeter for transferring stacking forces to the wall of the lower vessel.

28. The container of any of the foregoing claims, wherein said fill opening (12) is at or near the center of said lid (10) in a raised, thickened section thereof, and said lid's upper side is sloped downward from said opening (12) toward the outer circumference of the lid to prevent pooling on the lid.

29. The container of any of the foregoing claims, wherein said plastic has a flexural modulus of about 1379 N/mm² to 6895 N/mm² (200,000 to 1,000,000 p.s.i.) (ASTM Method D 790), a tensile modulus of about 1379 N/mm² to 6895 N/mm² (200,000 to 1,000,000 p.s.i.) (ASTM Method D 638), and a Rockwell hardness of about R-100 to R-130 (ASTM Method D 785).

30. The container of any of claims 9 to 29, wherein said tub (50) is molded with the walls (51) of said tub extending downward from said tub's bottom (57), such that when said containers are stacked one on top of another the lower circumference of said upper container's tub contacts said lid (10) of said lower container immediately inby an inner concentric rib (15B) on the top surface of the lid (10) immediately above a continuous concentric gusset (17C) molded into the bottom surface of the lid which distributes said upper container's weight to said lower container's vessel's wall, wherein said tub (50) has forklift pockets (56) permitting at least two-way entry, said concentric rib (17C) encircles the upper container tub and stabilizes same against lateral movement.

31. The container of claim 1, said container having a capacity in the range of about 110 to 3800 liters (30 to 1000 gallons) and being molded out of a cross-linked thermoset polymer of dicyclopentadiene with a controlled wall thickness that is non-uniform but great enough to make the container self-supporting and free-standing.

32. The container of claim 31, wherein the thickest wall portion is at least 2,54 cm (one inch) thick.

33. The container of either of claims 31 or 32, wherein the wall thickness is great enough to enable the container to pass the ambient drop test, the cold drop test, the hydrostatic test, the stacking test, and the vibration test set forth in Title 49 of the Code of Federal Regulations of the United States of America at, respectively, § 178.19-7(a) (1), § 178.19-7(a)(2), § 178.19-7(a)(3), § 178.254-4(a)(2)(iii), and § 178.253-5(a)(1).

34. The container of any of claims 31 to 33, wherein the capacity of the container is in the range of about 210 to 1900 liters (55 to 500 gallons).

35. The container of any of claims 31 to 34, wherein the container has a female-threaded discharge hole (27) through a section of its wall which is at least 2,54 cm (one inch) thick, said hole being suitable for receiving a male-threaded dispensing device (30).

36. The container of claim 35, wherein the container has a bottom (24) that slopes downward to the discharge hole (27).

37. The container of any of claims 31 to 36, wherein the container has an open top and a removable lid (10) having a diameter approximately as great as the width of the container at its top.

38. The container of claim 37, wherein the sides of the container slope downward from the top, so that a plurality of said containers can be nested one inside the other when their tops have been removed.

39. The container of claim 1, wherein said cap (13) has an outer thread area and a center area wide enough to accommodate a threaded bunghole (13A), the cap being molded in one piece and its thickness varying from its outer thread area to its center, with the outer thread area being at least about 2,54 cm (one inch) thick, the center area being sufficiently wide and thick to accommodate a 10 cm (4 inch) diameter bung, and wherein the cap (13) includes an annular membrane region between the center area and the outer thread area which is wide enough to accommodate a 5.08 cm (two-inch) diameter bung and is thinner than either the center area or the outer thread area, but is at least about 0.938 cm (0.375 inch) thick.

40. The container of claim 39, wherein the lid is molded out of a cross-linked thermoset polymer of dicyclopentadiene.

41. The container of either claim 39 or 40 wherein the lid further includes lug recesses (12A) in the upper side of said cap (12).

## Patentansprüche

1. Transportierbarer, selbsttragender Kunststoffbehälter, der aufweist:
- ein steifes, rundes Kunststoffgefäß (20), wobei das Gefäß einen Boden (24), eine seitliche Wand (21A, 21B), die eine Aussparung (25) aufweist, die benachbart zu dem Boden (24) ist, und die an dieser Aussparung (25) dicker als die dünnste Dicke anderswo ist, und eine Öffnung in dem oberen Teil aufweist, und wobei das Gefäß (20) in einem Stück geformt ist und eine variable Wanddicke aufweist; und
- Befestigungseinrichtungen, die auf einem Deckel (10) angeordnet sind, der auf die Öffnung paßt,
- entsprechende Befestigungseinrichtungen, die auf dem Gefäß (21A, 21B) angeordnet sind, so daß die entsprechenden Befestigungseinrichtungen auf dem Gefäß (21A, 21B) mit den Befestigungseinrichtungen auf dem Deckel (10) zusammenpassen, um den Deckel (10) an der Öffnung des Gefäßes (20) zu halten;
dadurch gekennzeichnet, daß
a) die Öffnung eine runde Öffnung mit über den vollen Durchmesser ist;
b) die Befestigungseinrichtungen auf dem Gefäß (21A, 21B) an der seitlichen Wand angeordnet sind;
c) der Deckel zumindest eine mit einem Gewinde versehene Füllöffnung (12) in sich aufweist;
d) der Behälter einen mit einem Gewinde versehenen Aufsatz (13) aufweist, der mit den Gewinden in der Füllöffnung (12) in dem Deckel (10) zusammenpaßt;
e) die seitliche Wand (21A, 21B) von oben nach unten und nach innen (24) geneigt ist;
f) die innenseitige Oberfläche des Bodens in Richtung nach unten zu der Aussparung (25) abgeschrägt ist; und
g) die seitliche Wand (21A, 21B) zumindest ungefähr dreimal dicker an der Aussparung (25) als die dünnste Dicke anderswo ist.

2. Behälter gemäß Anspruch 1, bei dem die seitliche Wand (21A, 21B) einen oberen, kegelstumpfförmigen, konischen Abschnitt (20A) und einen unteren, zurückgesetzten kegelstumpfförmigen, konischen Abschnitt (20B) aufweist, wobei beide konische Abschnitte (20A, 20B) Abschnitte von geraden kreisförmigen Kegeln sind.

3. Behälter gemäß einem der Ansprüche 1 oder 2, bei dem die seitliche Wand (21A, 21B) eine Vielzahl von festen vertikalen Rippen (22) auf zumindest einer der inneren und der äußeren Oberflächen der Wand aufweist.

4. Behälter gemäß einem der vorangehenden Ansprüche, bei dem die Befestigungseinrichtungen, die auf der Wand (21A, 21B) angeordnet sind, und die entsprechenden Befestigungseinrichtungen, die auf dem Deckel (10) angeordnet sind, umlaufende Gewinde (18, 28) sind.

5. Behälter gemäß Anspruch 4, bei dem die Gewinde (18, 28) auf dem Deckel (10) in einem engen Ring (19) liegen, der durch parallele, innere und äußere umlaufende Wandabschnitte definiert ist, die in Richtung nach unten von der Unterseite des Deckels (10) vorstehen und durch eine Breite getrennt sind, die ungefähr die gleiche ist, wie die Breite der seitlichen Wand (21A, 21B) an ihrem oberen Teil.

6. Behälter gemäß Anspruch 5, bei dem die Gewinde (18, 28) auf der oberen Seite der Wand Außengewinde (28) sind.

7. Behälter gemäß einem der vorangehenden Ansprüche, bei dem das Gefäß (820) eine Kapazität in einem Bereich von 110 bis 3800 Litern (30 bis 1000 Gallonen) aufweist.

8. Behälter gemäß den Ansprüchen 1 bis 6, bei dem das Gefäß (20) eine Kapazität in einem Bereich von ungefähr 210 bis 1900 Litern (55 bis 500 Gallonen) aufweist.

9. Behälter gemäß Anspruch 1, bei dem die Aussparung (25) der Wand (21A, 21B) ein mit einem Innengewinde versehenes horizontales Abflußloch (27) durch sich hindurch aufweist, das zum Aufnehmen einer mit einem Außengewinde versehenen Zapfvorrichtung (30) geeignet ist.

10. Behälter gemäß einem der vorangehenden Ansprüche, bei dem der Kunststoff ein Biegungsmodul von zumindest ungefähr 1379 N/mm² (200.000 p.s.i.) (ASTM-Verfahren D 790), einen Dehnungsmodul von zumindest ungefähr 1379 N/mm² (200.000 p.s.i.) (ASTM-Verfahren D 638) und eine Rockwell-Härte von ungefähr R-100 bis R-130 (ASTM-Verfahren D 785) aufweist.

11. Behälter gemäß einem der vorangehenden Ansprüche, bei dem die vertikalen Rippen (22) des Gefäßes (20) konvex auf der inneren Oberfläche der Wand (21A, 21B) und bündig auf der äußeren Oberfläche der Wand sind.

12. Behälter gemäß Anspruch 11, bei dem die vertikalen Rippen (22) nur auf der inneren Oberfläche der Wand des oberen konischen Abschnittes konvex sind.

13. Behälter gemäß einem der vorangehenden Ansprüche, bei dem die Wand (21A, 21B) einen Neigungswinkel innerhalb eines Bereiches von ungefähr 2 bis 10 Grad aufweist.

14. Behälter gemäß einem der vorangehenden Ansprüche, bei dem die Unterseite des Bodens (24) des Gefäßes (20) eine Vielzahl von nach unten gerichtet vorstehenden, dreieckigen verstärkenden Längsrippen (29) aufweist, wobei jede Längsrippe (29) eine obere Kante und eine untere Kante aufweist, so daß die Längsrippen sich von dem Boden (24) des Behälters erstrecken und an ihren Bodenkanten im wesentlichen bündig mit der Bodenkante der seitlichen Wand sind.

15. Behälter gemäß einem der vorangehenden Ansprüche, bei dem die Dicke der Wand (21A, 21B) an ihrem dünnsten Punkt innerhalb eines Bereiches von ungefähr 0.145 bis 0.380 Inch (0.36 bis 0.88 cm) liegt.

16. Behälter gemäß einem der vorangehenden Ansprüche, bei dem der Deckel (10) zumindest eine Expansionskammer in sich aufweist, die eine Lufttasche einschließt, wenn der Behälter mit einer Flüssigkeit bis zu der Unterseite der Füllöffnung gefüllt ist.

17. Behälter gemäß einem der vorangehenden Ansprüche, bei dem die obere Seite des Deckels (10) eine oder mehrere konzentrische externe Rippen (15A, 15B) aufweist.

18. Behälter gemäß Anspruch 1, bei dem der Aufsatz (13) ein mit einem Gewinde versehenes Spundloch (13A) in sich und einen mit einem Gewinde versehenen Spund (13B) aufweist, um ihn in das Spundloch zu stecken, und wobei die mit einem Gewinde versehene Füllöffnung (12) eine nach innen vorstehende Lippe für den Boden des Aufsatzes (13) als Gegensitz aufweist, um dadurch zu erlauben, daß die Gewinde der Füllöffnung und die Gewinde des Aufsatzes gegenüber dem Kontakt mit dem Inhalt des Gefäßes abgedichtet sind.

19. Behälter gemäß einem der Ansprüche 16 bis 18, bei dem die Expansionskammer in dem Deckel (10) als eine gewölbte Vertiefung (11) geformt ist, die konzentrisch mit dem Umfang des Deckels ist.

20. Behälter gemäß Ansprüche 1, 15 oder 19, bei dem der Kunststoff aus einer Gruppe ausgewählt ist, die aus Dicyclopentadien-Polymeren, Polyurethan und Polykarbamid besteht.

21. Behälter gemäß Anspruch 20, bei dem der Kunststoff Poly (Dicyclopentadien) ist.

22. Behälter gemäß einem der vorangehenden Ansprüche, bei dem das Gefäß (20) eine Kapazität in dem Bereich von 760 bis 1900 Litern (200 bis 500 Gallonen) aufweist.

23. Behälter gemäß einem der vorangehenden Ansprüche, bei dem das Verhältnis der Höhe des Gefäßes (20) zu dem Durchmesser des Gefäßes an seinem Boden (24) in einem Bereich von ungefähr 1:1 bis 2:1 liegt.

24. Behälter gemäß einem der vorangehenden Ansprüche, bei dem die seitliche Wand (21A, 21B) einen unteren Abschnitt (20B) aufweist, der sich unter dem Boden des Gefäßes (24) erstreckt und wobei der untere Abschnitt (20B) Gabeltaschen (56) aufweist, die zumindest einen Zwei-Wege-Eingang durch die Spitzen eines Gabelstaplers (84) erlauben.

25. Behälter gemäß 22 oder 24, bei dem die Gabeltaschen (56) in dem unteren Abschnitt der Wand (20B) einen Vier-Wege-Eingang durch die Spitzen eines Gabelstaplers (84) erlauben.

26. Behälter gemäß einem der Ansprüche 9 bis 23, der zusätzlich eine steife, runde Kunststoffwanne (50) aufweist, die in einem Stück geformt ist, wobei die Wanne (50) einen Boden (57), eine seitliche Wand (51), einen offenen oberen Teil und eine Zugangsöffnung zu der Spundvorrichtung aufweist und eine Form und eine Größe aufweist, die erlaubt, daß das Gefäß (20) in der Wanne (50) sitzen kann, wobei die seitliche Wand (51) der Wanne (50) sich unter dem Boden (57) der Röhre erstreckt und Gabeltaschen (56) aufweist, die zumindest einen Zwei-Wege-Eingang erlauben, und wobei die Höhe der Wand (51) der Wanne über ihrem Boden (57) ungefähr 33 bis 50 Prozent der Höhe der Wand des Gefäßes (51) über seinem Boden (57) ist, so daß der obere Teil der seitlichen Wand (51) der Wanne an eine abgeschrägte Schulter (23) in der Wand des Gefäßes (21A, 21B) anstößt, die durch die Verbindung des oberen kegelstumpfförmigen konischen Abschnittes (20A) mit dem unteren kegelstumpfförmigen konischen Abschnitt (20B) gebildet ist.

27. Behälter gemäß einem der vorangehenden Ansprüche, bei dem die Unterseite des Deckels (10) mit einem dicken konzentrischen Keil (17C) um den äußeren Umfang geformt ist, um Stapelkräfte an die Wand des unteren Gefäßes zu übertragen.

28. Behälter gemäß einem der vorangehenden Ansprüche, bei dem die Füllöffnung (12) an oder nahe des Zentrums des Deckels (10) in einem erhöhten, verdickten Abschnitt davon ist und wobei die obere Seite des Deckels nach unten von der Öffnung (12) in Richtung des äußeren Umfanges des Deckels abgeschrägt ist, um das Poolbilden auf dem Deckel zu verhindern.

29. Behälter gemäß einem der vorangehenden Ansprüche, bei dem der Kunststoff ein Biegungsmodul von ungefähr 1379 N/mm² bis 6895 N/mm² (200.000 bis 1.000.000 p.s.i.) (ASTM-Verfahren D 790), ein Dehnungsmodul von ungefähr 1379 N/mm² bis 6895 N/mm² (200.000 bis 1.000.000 p.s.i.) (ASTM-Verfahren D 638) und eine Rockwell-Härte von ungefähr R-100 bis R-130 (ASTM-Verfahren D 785) aufweist.

30. Behälter gemäß einem der Ansprüche 9 bis 29, bei dem die Wanne (50) so geformt ist, daß die Wände (51) der Wanne sich in Richtung nach unten von dein Boden der Wanne (56) erstrecken, so daß, wenn die Behälter aufeinander gestappelt sind, der untere Umfang der Wanne des oberen Behälters den Deckel (10) des unteren Behälters unmittelbar in einer inneren konzentrischen Rippe (15B) auf der oberen Oberfläche des Deckels (10) unmittelbar über einem konzentrischen Keil (17C) berührt, der in die Bodenoberfläche des Deckels geformt ist und der das Gewicht des oberen Behälters an die Wand des Gefäßes des unteren Behälters verteilt, wobei die Wanne (50) Gabeltaschen (56) aufweist, die zumindest einen Zwei-Wege-Eingang erlauben, wobei eine konzentrische Rippe (17C) die Wanne des oberen Containers umgibt und dieselbe gegenüber seitlicher Bewegung stabilisiert.

31. Behälter gemäß Anspruch 1, wobei der Behälter eine Kapazität im Bereich von ungefähr 110 bis 3800 Litern (30 bis 1000 Gallonen) aufweist und aus einem vernetzten wärmeausgehärteten Polymer aus Dicyclopentadien mit einer gesteuerten Wanddicke ist, die nicht gleichförmig aber groß genug ist, um den Behälter selbsttragend und freistehend zu machen.

32. Behälter gemäß Anspruch 31, bei dem der dickste Wandabschnitt zumindest 2,54 cm (ein Inch) dick ist.

33. Behälter gemäß einem der Ansprüche 31 oder 32, bei dem die Wanddicke groß genug ist, um zu ermöglichen, daß der Behälter den Falltest bei Umgebungstemperatur, den Falltest bei Kälte, den hydrostatischen Test, den Stapeltest und den Vibrationstest besteht, der im Titel 49 des Codes der Bundesregulierungen der Vereinigten Staaten von Amerika jeweils in den § 178.19-7(a)(1), § 178.19-7(a)(2), § 178.19-7(a)(3), § 178.254-4(a)(2)(iii) und § 178.253-5(a)(1) beschrieben ist.

34. Behälter gemäß einem der Ansprüche 31 bis 33, wobei die Kapazität des Behälters in dem Bereich von ungefähr 210 bis 1900 Litern (55 bis 500 Gallonen) liegt.

35. Behälter gemäß einem der Ansprüche 31 bis 34, bei dem der Behälter ein mit einem Innengewinde versehenes Abflußloch (27) durch einen Abschnitt seiner Wand aufweist, die zumindest 2,54 cm (ein Inch) dick ist, wobei das Loch dazu geeignet ist, eine mit einem Außengewinde versehene Spundvorrichtung (30) aufzunehmen.

36. Behälter gemäß Anspruch 35, wobei der Behälter einen Boden (24) aufweist, der in Richtung nach unten zu dem Abflußloch (27) abgeschrägt ist.

37. Behälter gemäß einem der Ansprüche 31 bis 36, wobei der Behälter ein offenes oberes Teil und einen entfernbaren Deckel (10) mit einem Durchmesser aufweist, der ungefähr so groß wie die Breite des Behälters an seinem oberen Teil ist.

38. Behälter gemäß Anspruch 37, bei dem die Seiten des Behälters in Richtung nach unten von dem oberen Teil abgeschrägt sind, so daß eine Vielzahl der Behälter ineinander verschachtelt werden können, wenn ihre Oberteile entfernt worden sind.

39. Behälter gemäß Anspruch 1, bei dem der Aufsatz (13) einen äußeren mit einem Gewinde versehenen Bereich und einen zentralen Bereich aufweist, der breit genug ist, um ein mit einem Gewinde versehenes Spundloch (13A) aufzunehmen, wobei der Aufsatz in einem Stück geformt ist und seine Dicke von seinem äußeren mit einem Gewinde versehenen Bereich zu seinem Zentrum variiert, wobei der äußere mit einem Gewinde versehene Bereich zumindest ungefähr 2,54 cm (ein Inch) dick ist, wobei der zentrale Bereich ausreichend weit ist und dick ist, um einen Spund mit einem Durchmesser von 10 cm (4 Inch) aufzunehmen, und wobei der Aufsatz (13) einen ringförmigen Membranbereich zwischen dem zentralen Bereich und dem äußeren mit einem Gewinde versehenen Bereich aufweist, der weit genug ist, um einen Spund mit einem Durchmesser von 5,08 cm (2 Inch) aufzunehmen, und dünner als entweder der zentrale Bereich oder der äußere mit einem Gewinde versehene Bereich ist, aber zumindest ungefähr 0,938 cm (0,375 Inch) dick ist.

40. Behälter gemäß Anspruch 39, bei dem der Deckel aus einem vernetzten wärmeausgehärteten Polymer aus Dicyclopentadien geformt ist.

41. Behälter gemäß Anspruch 39 oder 40, bei dem der Deckel außerdem Aussparungen (12A) für Ansätze in der oberen Seite des Aufsatzes (12) aufweist.

## Revendications

1. Conteneur en plastique transportable et auto-porteur comprenant :
- un récipient en plastique rigide et rond (20), le récipient ayant un fond (24), une paroi latérale (21A, 21B) comprenant un évidement (25) en voisinage du fond (24) et étant plus épais à l'endroit de l'évidement (25) que l'épaisseur la plus mince en tout autre endroit, et une ouverture dans la partie supérieure, et le récipient (20) étant moulé en une pièce et présentant une épaisseur de paroi variable ; et
- des moyens de fixation localisés sur un couvercle (10) adapté à ladite ouverture,
- des moyens de fixation correspondants localisés sur le récipient (21A, 21B) d'une façon telle que les moyens de fixation correspondants sur ledit récipient (21A, 21B) sont adaptés aux moyens de fixation sur le couvercle (10) pour retenir ledit couvercle (10) à l'ouverture de récipient (20) ;
caractérisé en ce que
a) ladite ouverture est une ouverture ronde sur la totalité du diamètre ;
b) les moyens de fixation sur ledit récipient (21A, 21B) sont localisés sur la paroi latérale ;
c) ledit couvercle comprend au moins une ouverture de remplissage (12) filetée ;
d) le conteneur inclut une garniture filetée (13) adaptée au filet de l'ouverture de remplissage (12) dans ledit couvercle (10) ;
e) ladite paroi latérale (21A, 21B) est inclinée vers l'intérieur de la partie supérieure et vers le bas (24) ;
f) la surface intérieure du fond est inclinée vers le bas et vers l'évidement (25) ; et
g) ladite paroi latérale (21A, 21B) est au moins environ trois fois plus épaisse à l'endroit de l'évidement (25) que l'épaisseur la plus mince en tout autre endroit.

2. Conteneur selon la revendication 1, caractérisé en ce que la paroi latérale (21A, 21B) a une partie supérieure conique tronquée (20A) et une partie inférieure conique tronquée en retrait (20B), lesdites deux parties coniques (20A, 20B) étant des parties de cônes droits de révolution.

3. Conteneur selon une des revendications 1 ou 2, caractérisé en ce que la paroi latérale (21A, 21B) a une pluralité de nervures verticales pleines (22) sur au moins une des surfaces intérieure et extérieure de ladite paroi.

4. Conteneur selon une des revendications précédentes, caractérisé en ce que lesdits moyens de fixations localisés sur ladite paroi (21A, 21B) et lesdits moyens de fixation correspondants localisés sur ledit couvercle (10) sont des filets circonférentiels (18, 28).

5. Conteneur selon la revendication 4, caractérisé en ce que les filets (18, 28) sur ledit couvercle (10) sont dans un espace annulaire étroit (19) défini par des sections de paroi circonférentielles parallèles, intérieures et extérieures en saillie vers le bas depuis la face inférieure du couvercle (10) séparé par une largeur approximativement la même que la largeur de ladite paroi latérale (21A, 21B) à sa partie supérieure.

6. Conteneur selon la revendication 5, caractérisé en ce que les filets (18, 28) sur la partie supérieure de ladite paroi sont des filets mâles (28).

7. Conteneur selon une des revendications précédentes, caractérisé en ce que le récipient (820) a une capacité dans une plage de 110 à 3800 litres (30 à 1000 gallons).

8. Conteneur selon les revendications 1 à 6, caractérisé en ce que le récipient (20) a une capacité dans une plage d'environ 210 à 1900 litres (55 à 500 gallons).

9. Conteneur selon la revendication 1, caractérisé en ce que l'évidement (25) de ladite paroi (21A, 21B) a un trou de décharge (27) ayant un filet femelle approprié pour recevoir un dispositif de distribution ayant un filet mâle (30).

10. Conteneur selon une des revendications précédentes, caractérisé en ce que le plastique a un module de flexion d'au moins environ 1379 N/mm, (200 000 p.s.i.) (Méthode ASTM D 790), un module de tension d'au moins environ 1379 N/mm² (200 000 p.s.i.) (Méthode ASTM D 638) et une dureté Rockwell d'environ R-100 à R-130 (Méthode ASTM D 785).

11. Conteneur selon une des revendications précédentes, caractérisé en ce que les nervures verticales (22) dudit récipient (20) sont convexes sur la surface intérieure de la paroi (21A, 21B) et à fleur sur ladite surface extérieure de ladite paroi.

12. Conteneur selon la revendication 11, caractérisé en ce que les nervures verticales (22) sont convexes seulement sur la surface intérieure de la paroi de la section conique supérieure.

13. Conteneur selon une des revendications précédentes, caractérisé en ce que la paroi (21A, 21B) a un angle d'inclinaison dans une plage d'environ 2 à 10 degrés.

14. Conteneur selon une des revendications précédentes, caractérisé en ce que la face inférieure dudit fond (24) dudit récipient (20) a une pluralité d'ailettes (29) de renforcement triangulaires et en saillie vers le bas, chacune des ailettes (29) ayant une bordure supérieure et une bordure inférieure d'une façon telle que lesdites ailettes s'étendent depuis le fond (24) du conteneur et sont substantiellement à fleur sur leur bordure inférieure avec ladite bordure inférieure de la paroi latérale.

15. Conteneur selon une des revendications précédentes, caractérisé en ce que l'épaisseur de ladite paroi (21A, 21B) à l'endroit de son point le plus mince se trouve dans une plage d'environ 0,145 à 0,380 pouce (0,36 à 0,88 cm).

16. Conteneur selon une des revendications précédentes, caractérisé en ce que le couvercle (10) comprend au moins une chambre d'expansion qui piègera une poche d'air quand le conteneur est rempli avec un liquide jusqu'au fond de l'ouverture de remplissage.

17. Conteneur selon une des revendications précédentes, caractérisé en ce que la face supérieure dudit couvercle (10) a une ou plusieurs nervures externes concentriques (15A, 15B).

18. Conteneur selon la revendication 1, caractérisé en ce que ladite garniture (13) comprend un trou de bonde (13A) et un bonde filetée (13B) pour obturer le trou de bonde, et en ce que ladite ouverture de remplissage filetée (12) a une lèvre en salle vers l'intérieur pour l'appui du fond de ladite garniture (13), permettant ainsi que les filets d'ouverture de remplissage et les filets de la garniture soient étanches contre un contact avec le contenu dudit récipient.

19. Conteneur selon une des revendications 16 à 18, caractérisé en ce que ladite chambre d'expansion dans ledit couvercle (10) a une forme d'une empreinte voûtée (11) qui est concentrique avec la circonférence dudit couvercle.

20. Conteneur selon une des revendications 1, 15 ou 19, caractérisé en ce que le plastique est choisi dans un groupe consistant en les polymères de dicyclopentadiène, le polyuréthanne et le polyurée.

21. Conteneur selon la revendication 20, caractérisé en ce que le plastique est un poly (dicyclopentadiène).

22. Conteneur selon une des revendications précédentes, caractérisé en ce que le récipient (20) a une capacité dans une plage de 760 à 1900 litres (200 à 500 gallons).

23. Conteneur selon une des revendications précédentes, caractérisé en ce que le rapport de la hauteur dudit récipient (20) au diamètre dudit récipient à l'endroit de son fond (24) est dans une plage d'environ 1:1 à 2:1.

24. Conteneur selon une des revendications précédentes, caractérisé en ce que ladite paroi latérale (21A, 21B) a une section inférieure (20B) s'étendant au-dessous du fond dudit récipient (24), et ladite section inférieure (20B) inclut des entrées de fourches (56) permettant au moins une entrée à deux voies par une pointe de fourche (84).

25. Conteneur selon la revendication 22 ou 24, caractérisé en ce que les entrées de fourches (56) dans la section inférieure de ladite paroi (20B) permettent une entrée à quatre voies par une pointe de fourche (84).

26. Conteneur selon une des revendications 9 à 23, comprenant additionnellement un bac en plastique rond et rigide (50) formé d'une pièce, le bac (50) ayant un bas (57), une paroi latérale (51), une partie haute ouverte et une ouverture d'accès vers le dispositif de distribution et étant d'une forme et taille permettant audit récipient (20) d'être logé à l'intérieur du bac (50), ladite paroi latérale (51) dudit bac (50) s'étendant sous le bas du bac (57) et incluant des entrées de fourche (56) permettant au moins une entrée à deux voies, et la hauteur de la paroi du bac (51) au-dessus de son bas (57) étant d'environ 33 à 50 pour-cent de la hauteur de la paroi du récipient (51) au-dessus son bas (57) d'une façon telle que le haut de la paroi latérale du bac (51) aboutit à un épaulement incliné (23) dans la paroi dudit récipient (21A, 21B) formée par la liaison de la partie supérieure conique tronquée (20A) avec la partie inférieure conique tronquée (20B).

27. Conteneur selon une des revendications précédentes, caractérisé en ce que la face inférieure du couvercle (10) est formée avec un gousset épais concentrique (17C) autour du périmètre extérieur pour transférer des forces d'empilage à la paroi du récipient inférieur.

28. Conteneur selon une des revendications précédentes, caractérisé en ce que l'ouverture de remplissage (12) se trouve à l'endroit ou au voisinage du centre du couvercle (10) dans une partie élevée, épaisse de celui-ci, et que la face supérieure du couvercle est inclinée vers le bas à partir de l'ouverture (12) vers la circonférence extérieure du couvercle afin d'empêcher une accumulation sur le couvercle.

29. Conteneur selon une des revendications précédentes, caractérisé en ce que le plastique a un module de flexion d'environ 1379 N/mm² à 6895 N/mm² (200 000 à 1 000 000 p.s.i.) (Méthode ASTM D 790), un module de tension d'environ 1379 N/mm² à 6895 N/mm² (200 000 à 1 000 000 p.s.i.) (Méthode ASTM D 638) et une dureté Rockwell d'environ R-100 à R-130 (Méthode ASTM D 785).

30. Conteneur selon une des revendications 9 à 29, caractérisé en ce que le bac (50) est formé avec les parois (51) dudit bac s'étendant vers le bas à partir du bas du bac (57) d'une façon telle que quand les conteneurs sont empilés l'un sur l'autre la circonférence inférieure du bac du conteneur supérieur est en contact avec le couvercle (10) du conteneur inférieur immédiatement par une nervure concentrique intérieure (15B) sur la surface supérieure du couvercle (10) immédiatement au-dessus un gousset concentrique continu (17C) formé dans la surface du bas du couvercle distribuant le poids du conteneur supérieur à la paroi du récipient du conteneur inférieur, le bac (50) ayant des entrées de fourche (56) permettant au moins une entrée à deux voies et ladite nervure concentrique (17C) encercle le bac du conteneur supérieur et stabilise le même contre un mouvement latéral.

31. Conteneur selon la revendication 1, caractérisé en ce que le conteneur a une capacité dans une plage d'environ 110 à 3800 litres (30 à 1000 gallons) et est formé d'un polymère de dicyclopentadiène réticulé durci à la chaleur avec une épaisseur de paroi contrôlée non uniforme mais assez grande pour rendre le conteneur auto-portant et tenant librement debout.

32. Conteneur selon la revendication 31, caractérisé en ce que la partie la plus épaisse de la paroi a une épaisseur d'au moins 2,54 cm (un pouce).

33. Conteneur selon une des revendications 31 ou 32, caractérisé en ce que l'épaisseur de la paroi est assez grande pour permettre au conteneur de passer le test d'une chute à température ambiante, le test d'une chute à froid, le test hydrostatique, le test d'empilage, et le test de vibration comme expliqué dans le Titre 49 du "Code of Federal Regulations" des Etats-Unis d'Amérique, respectivement § 178.19-7(a) (1), § 179.19-7(a) (2), § 178.19-7(a) (3), § 178.254-4(a) (2) (iii), et § 178.253-5(a) (1).

34. Conteneur selon une des revendications 31 à 33, caractérisé en ce que la capacité du conteneur est dans une plage d'environ 210 à 1900 litres (55 à 500 gallons).

35. Conteneur selon une des revendications 31 à 34, caractérisé en ce que le conteneur comprend un trou de décharge avec un filet femelle (27) au travers d'une partie de sa paroi ayant une épaisseur d'au moins 2,54 cm (un pouce), ledit trou étant approprié pour recevoir un dispositif de distribution (30) avec un filet mâle.

36. Conteneur selon la revendication 35, caractérisé en ce que le conteneur a un bas (24) incliné vers le bas en direction du trou de décharge (27).

37. Conteneur selon une des revendications 31 à 36, caractérisé en ce que le conteneur a une partie haute ouverte et un couvercle amovible (10) ayant un diamètre approximativement aussi grand que la largeur du conteneur à sa partie supérieure.

38. Conteneur selon la revendication 37, caractérisé en ce que les côtés du conteneur sont inclinés vers le bas à partir de la partie supérieure ainsi qu'une pluralité de conteneurs peuvent être emboîtés l'un dans l'autre si leurs parties supérieures ont été démontées.

39. Conteneur selon la revendication 1, caractérisé en ce que la garniture (13) comprend une région filetée extérieure et une région centrale assez large pour loger un trou de bonde (13A), la garniture étant formée en une pièce et son épaisseur variant de sa région extérieure filetée vers son centre, la région extérieure filetée ayant au moins une épaisseur d'environ 2,54 cm (un pouce), la région centrale étant suffisamment large et épaisse pour accommoder un bonde d'un diamètre de 10 cm (4 pouces) et en ce que la garniture (13) inclut une région de membrane annulaire entre la région centrale et la région extérieure filetée qui est assez large pour loger un bonde d'un diamètre de 5,08 cm (deux pouces) et est plus mince que soit la région centrale, soit la région extérieure filetée mais a une épaisseur d'au moins environ 0,938 cm (0.375 pouce).

40. Conteneur selon la revendication 39, caractérisé en ce que le couvercle est formé d'un polymère de dicyclopentadiène réticulé durci à la chaleur.

41. Conteneur selon la revendication 39 ou 40, caractérisé en ce que le couvercle inclut de plus des évidements de tenons (12A) dans la face supérieure de la garniture (12).
